# EUROPEAN PATENT APPLICATION

(11) **EP 3 118 796 A1**
(43) Date of publication of application: **18.01.2017**
(21) Application number: 16179481.3
(22) Date of filing: 14.07.2016
(51) Int. Cl.: G06Q 20/32, G06Q 20/38, G06Q 20/42

(54) **PAYMENT INFORMATION OPERATION METHOD AND ELECTRONIC DEVICE FOR SUPPORTING THE SAME**

(30) Priority: 14.07.2015 KR 20150100125
(71) Applicant: Samsung Electronics Co., Ltd., Suwon-si, Gyeonggi-do 16677 (KR)
(72) Inventor: Lim, Seon Jae, 21104 Incheon (KR); Cho, Boo Hyun, 16999 Gyeonngi-do (KR)
(74) Representative: Land, Addick Adrianus Gosling

(57) **Abstract**

An electronic device and method are disclosed for executing electronic payments. The electronic device includes a first communication circuit for local-area communication with an external payment device, a second communication circuit for wireless communication with a second external computing device, a user interface, and memory, all electrically coupled to a processor. The processor may execute the method, including: receiving payment related information from the second external computing device using the second communication circuit, executing a payment by outputting the received payment related information to the first external computing device through the external payment device using the first communication circuit, receiving payment processing information from the second external computing device indicating a result of the executed payment, and outputting the received payment processing information.

## Description

The present disclosure relates to operating electronic devices, and more particularly, to executing electronic payment via electronic devices.

Recently, an electronic device may provide a variety of functions to its user. The electronic device may perform a payment function as well as a call function and a multimedia function. The electronic device may have a communication function for communicating information with an external device. The electronic device may communicate information, associated with a payment, with the external device using the communication function.

A user who uses the payment function of the conventional electronic device should access a specific web site to verify payment completion information and should select various items. Also, the conventional electronic device in some circumstances may continuously output payment related information for a payment over some duration, thus wasting a substantial amount of power. In this process, the user might need to maintain a specific operating state of the electronic device during the duration.

Aspects of the present disclosure are to address at least the above-mentioned problems and/or disadvantages and to provide at least the advantages described below.

An aspect of the present disclosure is to provide a method and apparatus for more easily verifying payment information.

Accordingly, another aspect of the present disclosure is to provide a method and apparatus for reducing power consumed by a payment procedure.

In accordance with an aspect of the present disclosure, an electronic device is provided. The electronic device may include a first communication circuit configured to perform local-area communication with an external payment device communicatively coupled with a first external computing device, a second communication circuit configured to perform wireless communication with a second external computing device, a user interface, at least one memory storing instructions, and a processor electrically coupled with the first communication circuit, the second communication circuit, the user interface, and the at least one memory, wherein the instructions are executable by the processor to receive payment related information from the second external computing device using the second communication circuit, execute a payment by outputting the received payment related information to the first external computing device through the external payment device using the first communication circuit, receive payment processing information from the second external computing device using the second communication circuit, the received payment processing information indicating a result of the executed payment, and control the user interface to output the received payment processing information.

In accordance with another aspect of the present disclosure, a payment information operation method in an electronic device including a first communication circuit configured to perform local-area communication with an external payment device communicatively connected with a first external computing device, and a second communication circuit configured to perform wireless communication with a second external computing device, the method comprising: receiving payment related information from the second external computing device using a second communication circuit, executing a payment by outputting the received payment related information to the first external computing device through the external payment device using the first communication circuit, receiving payment processing information from the second external computing device using the second communication circuit, the received payment processing information indicating a result of the executed payment, and controlling a user interface to output the received payment processing information.

In accordance with another aspect of the present disclosure, a computing device (e.g., a payment server) is provided. The computing device may include a server communication interface configured to establish a communication channel with an electronic device or an external computing device which approves a payment and a server processor configured to collect payment processing information, indicating a result about a payment performed based on the payment related information, from the external computing device, after waiting for a time.

Other aspects and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a drawing illustrating a payment information operation environment of an electronic device according to various embodiments;
FIG. 2 is a block diagram illustrating a configuration of an electronic device according to an embodiment;
FIG. 3 is a flowchart illustrating a payment information operation method of an electronic device according to an embodiment;
FIG. 4 is a block diagram illustrating a configuration of a payment server according to an embodiment;
FIG. 5 is a flowchart illustrating a payment information operation method of a payment server according to an embodiment;
FIG. 6 is a block diagram illustrating a configuration of an electronic device according to another embodiment;
FIG. 7 is a block diagram illustrating program modules for being executed in an execution environment of an electronic device which may perform a payment function, according to an embodiment;
FIG. 8 is a signal sequence diagram illustrating a payment information operation process according to an embodiment;
FIG. 9 is a block diagram illustrating a configuration of a system associated with a payment information operation according to an embodiment;
FIG. 10 is a drawing illustrating a screen interface associated with a payment progress operation according to an embodiment;
FIG. 11 is a drawing illustrating a screen interface associated with a payment completion operation according to an embodiment;
FIG. 12 is a drawing illustrating a screen interface associated with outputting payment processing information, according to an embodiment;
FIG. 13 is a block diagram illustrating a configuration of an electronic device in a network environment which may perform a payment function, according to an embodiment;
FIG. 14 is a block diagram illustrating a configuration of an electronic device according to various embodiments; and
FIG. 15 is a block diagram illustrating a configuration of a program module according to various embodiments.

Throughout the drawings, it should be noted that like reference numbers are used to depict the same or similar elements, features, and structures.

### DETAILED DESCRIPTION OF EMBODIMENTS OF THE PRESENT INVENTION

Various embodiments of the present disclosure may be described with reference to accompanying drawings. Accordingly, those of ordinary skill in the art will recognize that modification, equivalent, and/or alternative on the various embodiments described herein can be variously made without departing from the scope of the present disclosure. With regard to description of drawings, similar components may be marked by similar reference numerals.

In the disclosure disclosed herein, the expressions "have", "may have", "include" and "comprise", or "may include" and "may comprise" used herein indicate existence of corresponding features (e.g., elements such as numeric values, functions, operations, or components) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The expressions such as "1st", "2nd", "first", or "second", and the like used in various embodiments of the present disclosure may refer to various elements irrespective of the order and/or priority of the corresponding elements, but do not limit the corresponding elements. The expressions may be used to distinguish one element from another element. For instance, both "a first user device" and "a second user device" indicate different user devices from each other irrespective of the order and/or priority of the corresponding elements. For example, a first component may be referred to as a second component and vice versa without departing from the present disclosure.

It will be understood that when an element (e.g., a first element) is referred to as being "(operatively or communicatively) coupled with/to" or "connected to" another element (e.g., a second element), it can be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

Depending on the situation, the expression "configured to" used herein may be used as, for example, the expression "suitable for", "having the capacity to", "designed to", "adapted to", "made to", or "capable of". The term "configured to" does not mean only "specifically designed to" hardwarily. Instead, the expression "a device configured to" may mean that the device is "capable of" operating together with another device or other components. For example, a "processor configured to perform A, B, and C" may mean a generic-purpose processor (e.g., a central processing unit (CPU) or an application processor) which may perform corresponding operations by executing one or more software programs which stores a dedicated processor (e.g., an embedded processor) for performing a corresponding operation.

Terms used in this specification are used to describe specified embodiments of the present disclosure and are not intended to limit the present disclosure. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude embodiments of the present disclosure.

Hereinafter, electronic devices according to various embodiments of the present disclosure will be described with reference to the accompanying drawings. The term "user" used herein may refer to a person who uses an electronic device or may refer to a device (e.g., an artificial electronic device) that uses an electronic device.

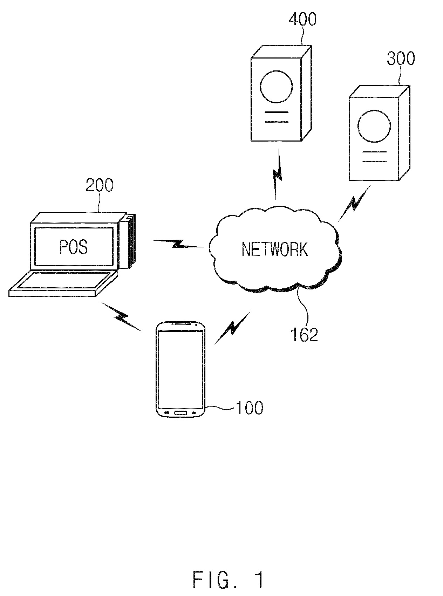

FIG. 1 is a drawing illustrating a payment information operation environment of an electronic device according to various embodiments.

Referring to FIG. 1, the payment information operation environment may include, for example, at least one electronic device 100, a payment processing device 200 (e.g., a point of sales (POS) system), a payment server 300, a financial server 400, and a network 162. According to an embodiment, the payment processing device 200 may include a payment processing device of a first mode (e.g., a device for supporting a payment of a magnetic secure transmission (MST) mode) and a payment processing device of a second mode (e.g., a device for supporting a payment of a near field communication (NFC) mode). In the above-mentioned payment information operation environment of the electronic device, the electronic device 100 may receive payment processing information (e.g., used records or a receipt (e.g., a virtual receipt or a receipt of a message form), and the like) collected by the payment server 300 based on payment processing and may output the received payment processing information through, for example, its user interface (e.g., its display).

According to various embodiments, the payment processing device 200 may process a payment of the electronic device 100 based on the first mode. For example, the payment processing device 200 may process a payment based on MST communication. According to various embodiments, the payment processing device 200 may process a payment based on the second mode. For example, the payment processing device 200 may process a payment based on NFC communication. If receiving payment related information from the electronic device 100, the payment processing device 200 may send an approval request to the financial server 400 through the network 162. The payment processing device 200 may receive and output an approval result from the financial server 400.

According to an embodiment, the financial server 400 may communicate with the payment server 300 or the payment processing device 200 over the network 162. If receiving a request to issue a token from the payment server 300, the financial server 400 may generate the token based on whether a specific condition is met (e.g., whether specific authentication is completed). The financial server 400 may provide the generated token to the payment server 300. Also, if receiving an approval request from the payment processing device 200, the financial server 400 may generate an approval result based on whether the received approval request is valid. The financial server 400 may provide the generated approval result to the payment processing device 200. According to various embodiments, if receiving a request to inquire about used records from the payment server 300, the financial server 400 may provide payment processing information (e.g., a receipt) corresponding to the request to the payment server 300. Also, if receiving a request to inquire about detailed information about used records from the payment server 300, the financial server 400 may provide the detailed information in response to the received request. According to an embodiment, the financial server 400 may provide information associated with an additional service (e.g., a service for processing a mileage or discount and the like) to the payment server 300.

According to an embodiment, the network 162 may support to establish a communication channel between the at least one electronic device 100 or the payment server 300, the payment processing device 200, and the financial server 400. For example, the network 162 may send an approval request, generated based on payment related information provided to the payment processing device 200 by the electronic device 100, to the financial server 400. The network 162 may send an approval result based on the approval result to the payment processing device 200. Also, the network 162 may send information of used records, detailed information about used records, and the like, stored in the financial server 400, to the payment server 300. Also, the network 162 may send information collected by the payment server 300 to the electronic device 100.

According to an embodiment, if the electronic device 100 is received a request associated with operating a payment function, the electronic device 100 may perform payment processing based on the payment processing device 200. For example, the electronic device 100 may activate a payment application based on a user input and user authentication. The electronic device 100 may receive a token, generated by the financial server 400, based on the activation of the payment application. The electronic device 100 may send payment related information to the payment processing device 200 based on operation of the payment application. According to an embodiment, the electronic device 100 may receive information associated with payment processing, collected from the financial server 400 by the payment server 300. Alternatively, the electronic device 100 may receive information about payment non-processing or payment processing failure and the like from the payment server 300. According to an embodiment, the electronic device 100 may output received payment processing information through, for example, a user interface (e.g., a speaker). Also, when receiving payment processing information (e.g., a receipt), the electronic device 100 may stop outputting (or sending, or transmitting, or broadcasting) payment related information.

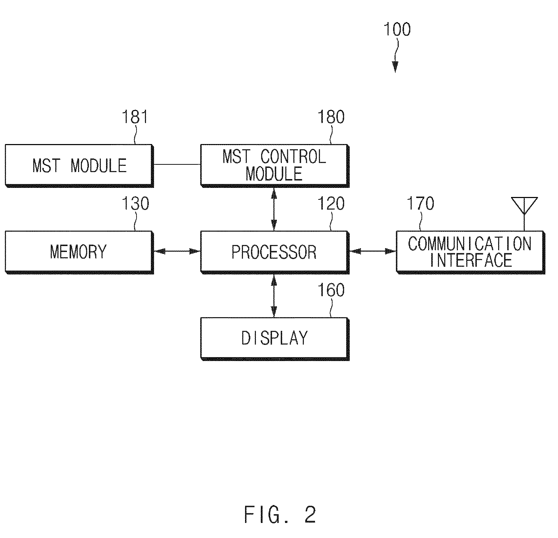

FIG. 2 is a block diagram illustrating a configuration of an electronic device according to an embodiment.

Referring to FIG. 2, an electronic device 100 may include a processor 120, a memory 130, a display 160 (e.g., a user interface), a communication interface 170, an MST communication module (or circuit, or circuitry) (e.g., an MST control module 180 and an MST module 181).

According to an embodiment, the memory 130 may include a volatile and/or non-volatile memory. The memory 130 may store, for example, a command or data associated with at least another of components of the electronic device 100. The command may be executed by the processor 120. The command may include, for example, a command associated with executing a payment application, a command associated with processing user authentication, a command to send a specific signal to the MST control module (or controller, or processor) 180 based on a payment request, and a command to output certain output information (e.g., a screen user interface or "UI", a sound, and vibration) corresponding to payment processing information when the payment processing information is received. According to an embodiment, the payment application may receive a specific application identifier or payment request information including the specific application identifier from a payment processing device 200 of FIG. 1. The payment application may receive information associated with an item to pay in the received payment request information. The payment application may write payment related information based on he received information.

The display 160 may include, for example, a liquid crystal display (LCD), a light emitting diode (LED) display, an organic LED (OLED) display, a microelectromechanical systems (MEMS) display, or an electronic paper display. The display 160 may display, for example, a variety of content (e.g., text, images, videos, icons, or symbols, and the like) to the user. The display 160 may include a touch screen, and may receive, for example, touch, gesture, proximity, or a hovering input using an electronic pen or part of a body of the user.

According to an embodiment, the display 160 may output information, associated with payment processing, through a specific user interface. For example, the display 160 may output an icon or menu item for executing the payment application. The display 160 may output a screen associated with processing user authentication for activating the payment application or processing user authentication requested by the payment application. The display 160 may include a screen for outputting payment related information, a screen for outputting payment processing information, and the like. The screen for outputting the payment processing information may include a screen for outputting a receipt based on completion of a normal payment, a screen associated with payment non-processing or payment failure, and the like.

The communication interface 170 may establish communication between, for example, the electronic device 100 and an external device (e.g., a payment server 300 of FIG. 1). For example, the communication interface 170 may connect to a network 162 of FIG. 1 through wireless communication or wired communication and may communicate with the external device (e.g., the payment server 106).

The wireless communication may use, for example, at least one of long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM), and the like as a cellular communication protocol. Also, the wireless communication may include, for example, local-area communication. The local-area communication may include, for example, at least one of wireless-fidelity (Wi-Fi) communication, Bluetooth (BT) communication, or global navigation satellite system (GNSS) communication, and the like. According to various embodiments, the MST module (or MST circuitry) 181 may be included in the communication interface 170.

According to an embodiment, the MST control module 180 may output (or send, or transmit, or broadcast) payment related information through the MST module 181. The payment related information may be, for example, information stored in the memory 130 included in the electronic device 100. The memory 130 may be embedded in the electronic device 100 or may be a storage space connected to the electronic device 100. Also, the payment related information may be generated based on the stored information by a data generation module (not shown) included in the electronic device 100. The payment related information generated by the data generation module may include, for example, security data or payment information. The security data may be, for example, data in which data stored in the memory 130 are encrypted. The payment information may include, for example, a primary account number (PAN), a device account number (DAN), virtual credit card information, a band information number (BIN), a card security code (CSC), a card verification value (CVV), or cryptogram, stored in the memory 130.

According to an embodiment, the MST control module 180 may provide, for example, payment related information such as a credit card number to the payment processing device 200. According to an embodiment, the MST control module 180 may control an output of the payment related information under control of the processor 120. For example, the MST control module 180 may maintain an output of the payment related information during a certain time (e.g., a few seconds to a few minutes) under control of the processor 120. If receiving payment processing information under control of the processor 120, the MST control module 180 may stop outputting the payment related information.

The MST module 181 may be a wireless communication module which outputs data in a near field magnetic data stripe transmission mode or a magnetic secure transmission (MST) mode. The MST module 181 may generate a pulse based on the payment related information, may convert the pulse into a magnetic field signal, and may output the magnetic field signal.

The processor 120 may include one or more of a central processing unit (CPU), an application processor (AP), or a communication processor (CP). For example, the processor 120 may perform, for example, calculation or data processing about control and/or communication of at least another of the components of the electronic device 100. According to an embodiment, the processor 120 may perform signaling associated with operating the payment application.

According to an embodiment, if a request to execute a payment function is received, the processor 120 may activate the payment application. In this operation, the processor 120 may perform processing associated with collecting and verifying user biometric information. According to an embodiment, the processor 120 may request a payment server 300 of FIG. 1 to issue a token when the payment application is executed and may send (or output) payment related information to the payment processing device 200 based on the received token. In this operation, the processor 120 may request to issue a token or may receive the token, through the communication interface 170. According to an embodiment, the processor 120 may generate payment related information based on the received token. The processor 120 may send, for example, the generated payment related information to the payment processing device 200 through the MST control module 180 and the MST module 181.

According to an embodiment, the processor 120 may receive payment processing information from the payment server 300. The payment processing information may include, for example, a result about an approval request sent to a financial server 400 of FIG. 1 by the payment processing device 200. According to an embodiment, the processor 120 may output the received payment processing information on the display 160. According to an embodiment, the processor 120 may stop outputting the payment related information in response to the reception of the payment processing information.

According to various embodiments, an electronic device may include a first communication circuit (e.g., an MST communication module) configured to perform local-area communication with an external payment device (e.g., a payment processing device) connected to communicate with a first external computing device (e.g., a financial server), a second communication circuit (e.g., a communication interface) configured to perform wireless communication with a second external computing device (e.g., a payment server), a user interface (e.g., a display), at least one memory, and a processor configured to electrically connect with the first communication circuit, the second communication circuit, the user interface, and the at least one memory. The at least one memory may store instructions, when executed, for instructing the processor to receive payment related information (or a token) from the second external computing device using the second communication circuit, to send the payment related information to the first external computing device through the external payment device using the first communication circuit to perform a payment, to receive payment processing information, indicating a result about the performed payment, from the second external computing device using the second communication circuit, and to provide the received payment processing information through the user interface.

According to various embodiments, the payment processing information may be generated based on information about used records provided from the first external computing device to the second external computing device.

According to various embodiments, an electronic device may include a memory configured to store at least one instruction set to perform an operation associated with payment processing and a processor configured to connect with the memory. The processor may receive payment processing information or payment non-processing information from a payment server which receives a request to relay a token and may output specific information based on the reception of the information.

According to various embodiments, the processor may receive notification corresponding to the reception of the payment processing information and may output information, for guiding the notification, through a user interface (e.g., a speaker or display).

According to various embodiments, when an input event associated with verifying the notification is generated, the processor may request the payment server (e.g., the second external computing device) to send the payment processing information and may receive the payment processing information from the payment server.

According to various embodiments, when receiving payment non-processing information, the processor may output specific information about the payment non-processing.

According to various embodiments, when receiving payment non-processing information, the processor may maintain the outputting of the payment related information through the first communication circuit (e.g., a specific communication module) or may repeat the outputting of the payment related information a specific number of times.

According to various embodiments, when a specific condition is met, the processor may stop outputting the payment related information.

According to various embodiments, when a time set to output the payment related information elapses, the processor may stop outputting the payment related information.

According to various embodiments, when receiving the payment processing information, the processor may stop outputting the payment related information.

According to various embodiments, when receiving the payment processing information, the processor may stop outputting the payment related information using the first communication circuit based on an MST mode.

According to various embodiments, the processor may inactivate at least one of an MST-type communication module and an NFC-type communication module corresponding to stop outputting the payment related information.

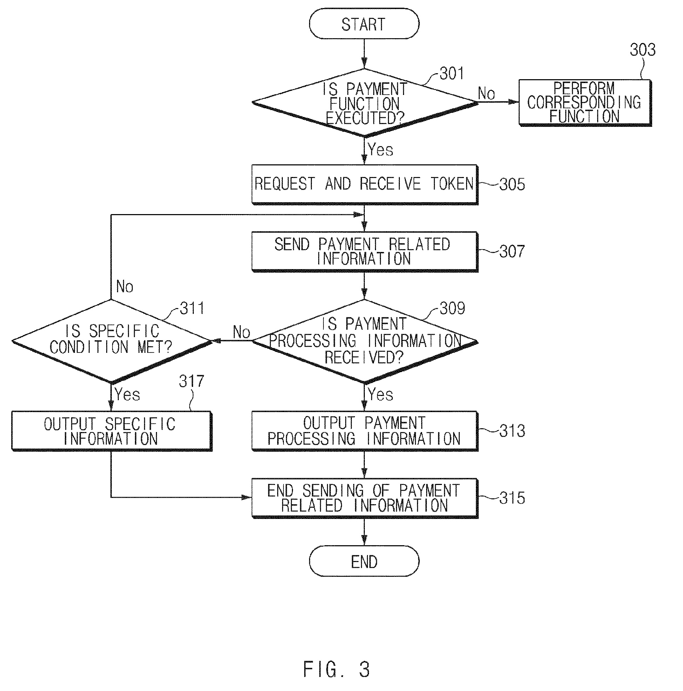

FIG. 3 is a flowchart illustrating a payment information operation method of an electronic device according to an embodiment of the present disclosure.

In operation 301, in connection with the payment information operation method, an electronic device 100 of FIG. 1 may determine whether an event associated with execution of a payment function is generated. For example, the electronic device 100 may output an item (e.g., such as an icon or menu and the like) associated with the payment function being executed. The electronic device 100 may determine that an event corresponding to selection of the icon is an event associated with executing the payment function.

If the event corresponding to the selection of the item is not an event associated with executing the payment function, then in operation 303, the electronic device 100 may execute some other or corresponding function based on a type of the event. For example, the electronic device 100 may reproduce a file or may support a web access function, based on the type of the event.

However, if the event associated with the payment function execution is generated, then in operation 305, the electronic device 100 may request a token and receive the requested token. For example, the electronic device 100 may execute a payment application in response to detecting the selection of the item. In this operation, the electronic device 100 may process user authentication (e.g., that is, the electronic device 100 may collect and compare user fingerprint information) related to execution of the payment. After the user authentication is successfully completed, then, if a specific payment card is selected by a user via some input (or if a particular card is already designated based on a default setting), then the electronic device 100 may transmit information regarding the selected card and a token request to the payment server 300 for processing of payment. According to various embodiments, after the payment card is selected, the electronic device 100 may perform a user authentication operation. Also, according to various embodiments, the electronic device 100 may transmit authentication information authenticated through an external electronic device (e.g., a user authentication server) in connection with user authentication, in addition to the card information and a token request to the payment server 300. After a card is selected, the electronic device 100 may process the user authentication. Once the payment server 300 as received the token request, the payment server 300 may communicate with a financial server 400 (e.g., as seen in FIG. 1) utilizing the received card information and thereby request the financial server 400 to issue a token. Once the token has bene issued to the payment server 300, the payment server 300 may provide the token issued by the financial server 400 to the electronic device 100. The payment server 300 may also temporarily store the token. If collection of payment processing information and the sending of the token to the electronic device 100 is detected to be completed, or if a specific time (e.g., predetermined time or countdown) is detected as having elapsed, the payment server 300 may remove the token.

In operation 307, if the electronic device 100 has received the token, the electronic device 100 may then output payment related information. In this regard, the electronic device 100 may generate the payment related information based on the received token. For example, the electronic device 100 may output the payment related information during a certain period of time, based on an MST control module 180 and an MST module 181 of FIG. 2.

In operation 309, the electronic device 100 may determine whether the payment processing information has been received. If the payment processing information is not received, then in operation 311, the electronic device 100 may determine whether a specific condition is met. The specific condition may include, for example, a lapse of a set period of time (e.g., a predetermined time or count down) after the payment related information is outputted or transmitted. Therefore, the electronic device 100 may determine whether the set period of time elapses while outputting the payment related information. For example, if the specific condition is not met, the electronic device 100 may branch to operation 307 and may reperform the operation from operation 307. For example, while a predetermined time starting from when the payment related information is output has not yet elapsed, the electronic device 100 may continue to output the payment related information. For example, once the outputting of the payment related information has been executed for the predetermined time, which has thus elapsed, the electronic device 100 may terminate outputting of the payment related information.

If the payment processing information is received, then in operation 313, the electronic device 100 may output the payment processing information. In operation 315, the electronic device 100 may end (e.g., terminate) output of the payment related information. According to various embodiments, if the payment processing information is received, the electronic device 100 may operate by first ending the output of the payment related information, and then executing output of the payment processing information. According to an embodiment, if the payment processing information is received while the payment related information is output based on an MST communication module, the payment related information to be received in the payment processing device 200, the electronic device 100 may terminate output of the payment related information. In this operation, the electronic device 100 may deactivate the MST communication module. According to various embodiments, if the payment processing information is received while executing output of the payment related information using both the MST communication module and an NFC communication module (e.g., an NFC module and an NFC control module), the electronic device 100 may terminate output of the payment related information. In this operation, the electronic device 100 may deactivate the MST communication module and the NFC communication module. In the above-mentioned operation, the electronic device 100 may operate the MST communication module and the NFC communication module alternately according to certain predesignated periods. For example, the electronic device 100 may operate the NFC communication module during a first period for transmission of payment related information, and may operate the MST communication module during a second period after the first period to output (e.g., generate and/or transmit) payment related information. Alternatively, according to various embodiments of the invention, the electronic device 100 may operate the MST communication module and the NFC communication module simultaneously to send payment related information. In this case, the MST communication module and the NFC communication module may send the payment related information at substantially the same time. According to various embodiments, the electronic device 100 may continue to output (or send) the payment related information before receiving the payment processing information. In this case, the electronic device 100 may output (e.g., generate or control a display to display) a user interface for guiding that the payment related information continues to be sent. The electronic device 100 may output transmission duration of the payment related information. The electronic device 100 may provide an input control, device, or means (e.g., a virtual button) selectable to execute stopping output of the payment related information. If a user of the electronic device 100 wants to stop output of the payment related information before the corresponding payment processing information is received, the electronic device 100 may generate an input signal in response to detecting a user selection of a relevant virtual button. The electronic device 100 may stop output of the payment related information in response to detecting the user input while outputting the payment related information.

In operation 311, if the specific condition is met, in operation 317, the electronic device 100 may output specific information. The specific condition may include, for example, information on a condition where a time at which output of payment related information is completed lapses before or without reception of payment processing information. If this time when the output of the payment related information is completed or reached without reception of the payment processing information, the electronic device 100 may determine payment processing has failed. The specific information may also or alternatively include, for example, information providing guidance or instruction for non-processing of payment or the aforementioned payment processing failure. According to various embodiments, in operation 313, the electronic device 100 may output information related to payment processing failure which is received from the payment server 300. Alternatively, the electronic device 100 may receive and output information about payment processing completion if the payment has processed successfully.

According to various embodiments, a payment information operation method of an electronic device, including a first communication circuit (e.g., at least one of an MST communication module and an NFC communication module) configured to perform local-area communication with an external payment device (e.g., a payment processing device) connected to communicate with a first external computing device (e.g., a financial server) and a second communication circuit (e.g., a communication interface, a cellular module, a radio frequency (RF) module, or a wireless-fidelity (Wi-Fi) module) configured to perform wireless communication with a second external computing device (e.g., a payment server), may include receiving payment related information from the second external computing device using the second communication circuit, outputting the payment related information to the first external computing device through the external payment device using the first communication circuit to perform a payment, receiving payment processing information, indicating a result about the performed payment, from the second external computing device using the second communication circuit, and outputting the received payment processing information through the user interface.

According to various embodiments, a payment information operation method may include receiving payment processing information or payment non-processing information from a payment server which receives a request to relay a token and outputting specific information based on the reception of the information.

According to various embodiments, the outputting of the received payment processing information may include receiving notification corresponding to the reception of the payment processing information and outputting information for guiding the notification.

According to various embodiments, the outputting of the received payment processing information may include receiving an input event associated with verifying the notification, and requesting the payment server to send the payment processing information and receiving the payment processing information from the payment server.

According to various embodiments, the outputting of the received payment processing information may include outputting specific information about payment non-processing when receiving payment non-processing information.

According to various embodiments, the method may further include maintaining the outputting of the payment related information through a specific communication module (e.g., the first communication circuit) or repeating the outputting of the payment related information a specific number of times, when receiving the payment non-processing information.

According to various embodiments, the method may further include stopping outputting the payment related information, when a specific condition is met.

According to various embodiments, the method may further include stopping outputting the payment related information, when a time set to output the payment related information elapses.

According to various embodiments, the method may further include stopping outputting payment related information, when receiving the payment processing information.

According to various embodiments, the stopping of the payment related information may include stopping outputting the payment related information based on an MST mode using the first communication circuit.

According to various embodiments, the method may further include inactivating at least one of an MST mode communication module or an NFC mode communication module, included in the first communication circuit, to be inactivated.

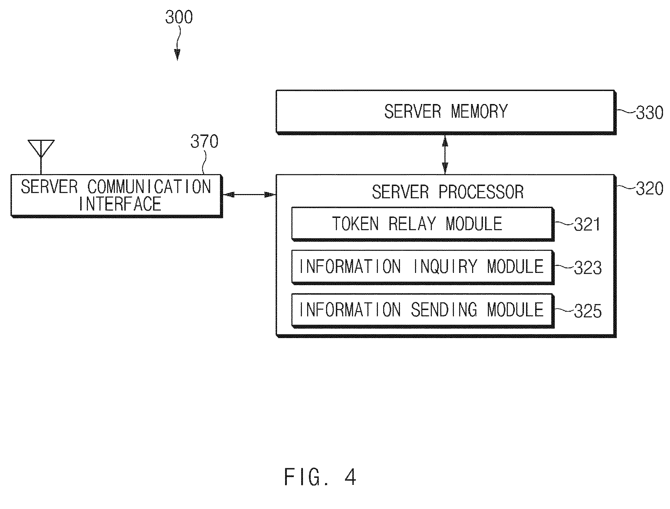

FIG. 4 is a block diagram illustrating a configuration of a payment server according to an embodiment.

Referring to FIG. 4, a payment server 300 may include a server processor 320, a server memory 330, and a server communication interface 370.

The server communication interface 370 may support a communication function of the payment server 300. According to an embodiment, the server communication interface 370 may establish, for example, a communication channel with an electronic device 100 of FIG. 1 over a network 162 of FIG. 1. Alternatively, the server communication interface 370 may establish a communication channel with a financial server 400 of FIG. 1 over the network 162. The server communication interface 370 may include, for example, a wired or wireless communication module. According to an embodiment, the server communication interface 370 may include a first server communication module which may communicate with the financial server 400 and a second server communication module which may communicate with the electronic device 100. If a token issue request is received from the electronic device 100, the server communication interface 370 may forward the received token issue request to the financial server 400. The server communication interface 370 may also transmit a token that is received from the financial sever 400 to the electronic device 100.

According to an embodiment, the server memory 330 may store at least one program or operating system (OS), data, and the like utilized for operating the payment server 300. According to an embodiment, the server memory 330 may store account information for the electronic device 100, or user information of the electronic device 100, and the like. According to an embodiment, the server memory 330 may temporarily store the token received from the financial server 400 based on the token issue request of the electronic device 100. For example, the validity of the token stored in the server memory 330 may be lost or otherwise expire over or after a certain time. The token stored in the server memory 330 may be deleted after a specific time elapses, by control of the server processor 320. Or, the token stored in the server memory 300 may be deleted if payment processing information is transmitted to the electronic device 100. The server memory 330 may thus, for example, temporarily store the payment processing information.

The server processor 320 may process a signal utilized for operating the payment server 300. According to an embodiment, the server processor 320 may include a token relay module 321, an information inquiry module 323, and an information sending module 325.

According to an embodiment, the token relay module 321 may receive a communication relay request from the electronic device 100. The token relay module 321 may identify card information or user information in response to the request from the electronic device 100. The token relay module 321 may verify the financial server 400 to receive a request to issue a token based on the card information. The token relay module 321 may provide the user information and the card information to the corresponding financial server 400 to request the corresponding financial server 400 to issue a token. The token relay module 321 may control the server memory 330 to temporarily store the token provided from the financial server 400. The token relay module 321 may send the token to the electronic device 100.

According to an embodiment, the information inquiry module 323 may wait for a specific time after the token is relayed. After waiting for the specific time, the information inquiry module 323 may request the financial server 400 to send payment processing information. For example, the information inquiry module 323 may wait for a statistical or reasonable time, taken for the electronic device 100 which receives the token to send payment related information for a payment to a payment processing device 200 of FIG. 1 and taken for the payment processing device 200 to send an approval request to the financial server 400. The information inquiry module 323 may request the financial server 400 to send payment processing information during the entire transmission time set to output payment related information based on a specific payment mode (e.g., an MST payment mode). Alternatively, the information inquiry module 323 may classify the entire transmission time on a certain time basis and may collect payment processing information at the corresponding time intervals. In this operation, the information inquiry module 323 may request the financial server 400 to inquire about a list of used records corresponding to the user information of the electronic device. The information inquiry module 323 may determine whether there is a specific date or a used record corresponding to the specific date in the list of the used records. If there is the used record, the information inquiry module 323 may request the financial server 400 to send (or transmit or delivery) detailed information about the corresponding used record. The information inquiry module 323 may collect information, matched with at least part of the temporarily stored token among the detailed information and may send the collected information as payment processing information to the information sending module 325. The information inquiry module 323 may send the collected payment processing information to the information sending module 325. Alternatively, the information inquiry module 323 may send payment non-processing information, about a state where payment processing information is not collected, to the information sending module 325. Also, if there is a failure to collect payment processing information after the entire transmission time elapses, the information inquiry module 323 may send payment failure information to the information sending module 325.

According to an embodiment, the information sending module 325 may convert a format of the received payment processing information into a specific format, for example, in the form of a specific receipt. For example, the information sending module 325 may first notify the electronic device 100 that there is payment processing information and may then send the payment processing information to the electronic device 100 in response to a request to send the payment processing information. Alternatively, the information sending module 325 may send a receipt corresponding to the payment processing information to the electronic device 100. The information sending module 325 may send notification of payment non-processing, a message for payment failure, and the like to the electronic device 100.

According to various embodiments, a computing device (e.g., a payment server) may include a server communication interface configured to establish a communication channel with an electronic device or an external computing device (e.g., a financial server) which approve a payment and a server processor configured to relay payment related information from the electronic device and to collect payment processing information, indicating a result about a payment performed based on the payment related information, from the external computing device after waiting for a specific time.

According to various embodiments, a computing device (e.g., a payment server) may include a server communication interface configured to establish a communication channel with an electronic device or a financial server and a server processor configured to relay a token from the electronic device and to collect payment processing information after waiting for a specific time.

According to various embodiments, the server processor may collect the payment processing information during the entire time, when payment related information is outputted, set in a specific communication mode of the electronic device.

According to various embodiments, the server processor may classify the entire time on a certain time basis and may collect the payment processing information at the classified time intervals.

According to various embodiments, if there is a failure to collect the payment processing information, the server processor may notify the electronic device that there is the failure to collect the payment processing information.

According to various embodiments, the server processor may request the financial server to inquire about a list of used records based on information about a user of the electronic device.

According to various embodiments, if there is information of a specific date or a specific time zone in the list of the used records, the server processor may collect detailed information of the corresponding date or time zone.

According to various embodiments, the server processor may send information matched with at least part of the token among the detailed information.

According to various embodiments, the server processor may convert the detailed information in the form of a specific receipt and may provide the converted information to the electronic device.

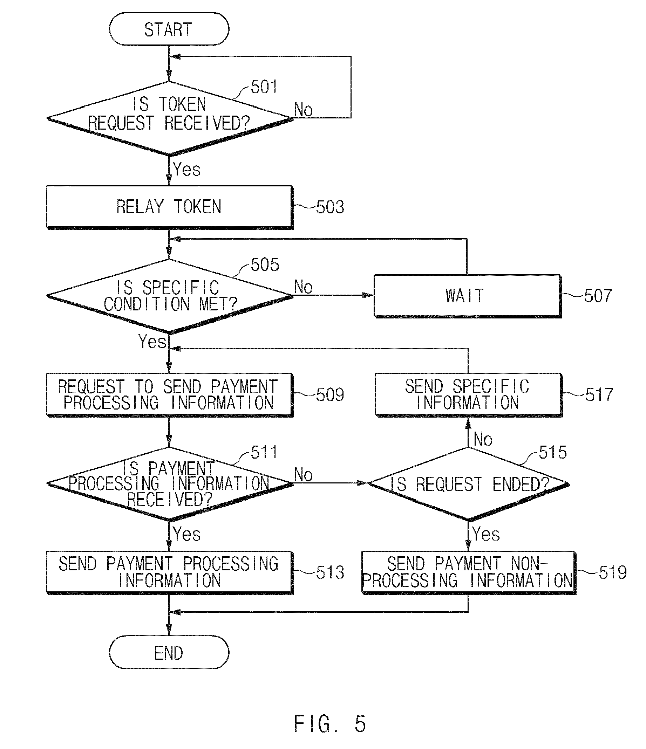

FIG. 5 is a flowchart illustrating a payment information operation method of a payment server according to an embodiment.

Referring to FIG. 5, in connection with the payment information operation method, in operation 501, a payment server 300 of FIG. 1 may determine whether a token request is received from an electronic device 100 of FIG. 1. If the token request is not received from the electronic device 100, the payment server 300 may branch to operation 501 and/or enter into a waiting state. If the token request is received from the electronic device 100, in operation 503, the payment server 300 may relay a token. For example, the payment server 300 may verify a type of a financial server 400 of FIG. 1 from the received token request, and may identify information about a user of the electronic device 100. The payment server 300 may provide the user information of the electronic device 100 to the financial server 400 as, for example, part of a request for the financial server 400 to issue a token. If the token is received from the financial server 400, the payment server 300 may send the received token to the electronic device 100. In this example operation, the payment server 300 may temporarily store the token. If a valid condition of the token is detected as having expired, or if output of the payment processing information is detected as being completed, the payment server 300 may delete the temporarily stored token.

In operation 505, the payment server 300 may determine whether a specific condition is met. The specific condition may include, for example, a in which a certain or predesignated time period has elapsed. Alternatively, the specific condition may include a condition for receiving a specific alarm (or specific notification) from the financial server 400. If the specific condition is not met, in operation 507, the payment server 300 may wait for a specific time. According to one embodiment, after the specific time elapses, the payment server 300 may reperform the operations again beginning from operation 505.

If the specific condition is met, in operation 509, the payment server 300 may request transmission of payment processing information. For example, the payment server 300 may determine whether a specific time has elapsed after relaying the token. If the specific time has elapsed, the payment server 300 may request transmission of the payment processing information from the financial server 400. In this operation, the payment server 300 may transmit user information of the electronic device 100 that is associated with payment processing information to be collected to the financial server 400. The specific time may be, for example, a statistically predictive time for the electronic device 100, after receiving a token to request the financial server 400, to perform payment through a payment processing device 200 of FIG. 1, and for the financial server 400 to approve the payment. Alternatively, the specific time may be configured or set purposely, based on for example an intention or a choice of a user/designer.

In operation 511, the payment server 300 may determine whether the payment processing information is received from the financial server 400. The financial server 400 may generate an approval result in response to receive an approval request from the payment processing device 200, and may store the generated approval result. The financial server 400 may provide the stored approval result as payment processing information to the payment server 300. According to an embodiment, the financial server 400 may transmit the payment processing information to the payment processing device 200. If the financial server 400 is operating in a state in which it stores the payment processing information (e.g., information stored based on the approval result), the payment server 300 may request transmission of the payment processing information from the financial server 400 and may then receive the payment processing information from the financial server 400. Prior to approving a payment, the financial server 400 may operate in a state in which it does not store the payment processing information. If no payment processing information is requested from the payment server 300, the financial server 400 may notify the payment server 300 that there is no payment processing information.

The payment server 300 may request the financial server 400 to transmit payment processing information at, during or within a certain period. For example, the payment server 300 may request the financial server 400 to provide payment processing information within a certain period designated from among a total quantity of time (e.g., within 7 seconds of a total processing time of22 seconds) in which output payment related information is to be classified a certain number of times in an MST mode. According to various embodiments, the payment server 300 may classify the entire 25 seconds, then determine a setting or configuration to output payment related information in the MST mode every 5 seconds, and may request the payment processing information from the financial server 400 for the classified number of times (e.g., five times for requests every 5 second through 25 second period).

According to various embodiments, the payment server 300 may provide user information and specific code information to the financial server 400. The financial server 400 may verify the user information and the specific code information and provide payment processing information associated with the electronic device 100 to the payment server 300. The code information may include, for example, information utilized for requesting provision of a list of used records. Alternatively, the code information may include information for requesting to provide detailed information about used records.

If the payment processing information is received, then in operation 513, the payment server 300 may send the received payment processing information to the electronic device 100. In this operation, the payment server 300 may request inquiry by the financial server 400 for a list of used records, and may receive the list of used records from the financial server 400. The payment server 300 may determine whether information stored on a present date exists within the information provided via the list of the used records. Alternatively, the payment server 300 may determine whether there is information correlating to a specific time range (e.g., a certain time range relative to a token relay time). If there is such information correlating to the specific time range, the payment server 300 may request the financial server 400 to send detailed information about the corresponding information. The payment server 300 may determine whether information matching at least part of temporarily stored token information exists among the received detailed information. If such information is detected, the payment server 300 may send the payment processing information matched with the token information to the electronic device 100.

If the payment processing information is not received, in operation 515, the payment server 300 may determine whether to terminate the request. For example, the payment server 300 may determine whether a configured count or number of times to request to collect the payment processing information has been completed. Alternatively, the payment server 300 may determine whether the entire time set to request to collect the payment processing information (e.g., the entire time set to send or output the payment related information in the MST mode) has expired.

If the request is not ended, in operation 517, the payment server 300 may send specific information to the electronic device 100. For example, the payment server 300 may send information (e.g., a specific notification), indicating handling of a state in which payment processing information is not collected to the electronic device 100. If the request is ended, then in operation 519, the payment server 300 may send payment non-processing information to the electronic device 100. For example, the payment server 300 may send information indicating that the payment processing information is not collected, to the electronic device 100. Alternatively, according to various embodiments, the payment server 300 may send information confirming or handing a payment processing failure to the electronic device 100.

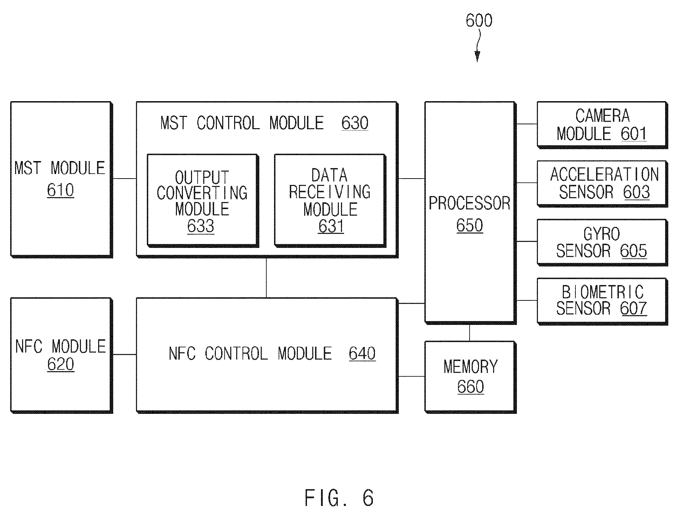

FIG. 6 is a block diagram illustrating a configuration of an electronic device according to another embodiment.

Referring to FIG. 6, an electronic device 600 according to an embodiment may include, for example, a camera module 601, an acceleration sensor 603, a gyro sensor 605, a biometric sensor 607, an MST module 610, an NFC module 620, an MST control module 630, an NFC control module 640, a processor 650, and a memory 660. The camera module 601 may capture a card utilized for a payment to obtain card information. The camera module 601 may recognize card information (e.g., a card company, a card number, a card expiration date, or a card owner, and the like), written on a card, through an optical character reader (OCR) function. Alternatively, a user of an electronic device (e.g., the electronic device 600) may enter card information in the electronic device using an input device (e.g., a touch panel, a pen sensor, a key, an ultrasonic input device, or a microphone input device, and the like) included in the electronic device.

According to an embodiment, the acceleration sensor 603 or the gyro sensor 605 may obtain a location state of the electronic device upon a payment. The obtained location information of the electronic device may be sent to the processor 650. The processor 650 may adjust the strength of a magnetic field (e.g., current strength) sent from the MST module 610 to a payment processing device 200 of FIG. 1 or may select a coil antenna to be used to send information among a plurality of antennas, based on the obtained location state of the electronic device.

According to an embodiment, the biometric sensor 607 may be used to collect information (e.g., fingerprint information) associated with user authentication. If a request to execute a payment application is received or if a request to send payment related information is received, the processor 650 may activate the biometric sensor 607. The processor 650 may compare collected biometric information with stored biometric information to perform user authentication.

According to an embodiment, the MST control module 630 may include a data receiving module 631 and an output converting module 633. The data receiving module 631 may receive a pulse signal (e.g., payment related information) of a logical low/high level, including payment information sent from the processor 650 or a secure module (e.g., an embedded security element (eSE)). The output converting module 633 may include a circuit for converting a format of data recognized by the data receiving module 631 into a format to transmit the converted data to the MST module 610. The circuit may include an H-bridge (or an H-shaped bridge) which controls a direction of voltage supplied to both ends of the MST module 610. The H-bridge may include a circuit structure which is connected as an H shape using a four-switch structure. If payment processing information is received from a payment server 300 of FIG. 1, the MST control module 630 may control the MST module 610 to stop outputting payment related information. Also, the MST control module 630 may enter an inactive state together with stopping outputting the payment related information.

The NFC module 620 may send a specific signal in response to control of the NFC control module 640. Alternatively, the NFC module 620 may receive a signal sent from an external device (e.g., a payment processing device 200 of FIG. 1) and may send the received signal to the NFC control module 640. The NFC control module 640 may determine whether there is the payment processing device 200, through the NFC module 620. If there is the payment processing device 200, the NFC control module 640 may control the NFC module 620 to send payment related information.

According to an embodiment, the electronic device may receive payment information (e.g., a track 1/2/3 or token information) included in a magnetic stripe of a magnetic card from a financial server (e.g., a card company/bank server) through a communication module (nor shown) based on card information input through the camera module 601 or the input device (e.g., the touch panel, a pen sensor, and the like) and may store the received payment information with a format in the memory 660 or a separate secure module (e.g., an eSE).

According to an embodiment, the processor 650 may request the payment server 300 to issue a token in response to a payment request. If receiving payment processing information from the payment server 300, the processor 650 may stop outputting payment related information. Also, the processor 650 may inactivate the MST control module 630, the MST module 610, the NFC control module 640, the NFC module 620, and the like. According to an embodiment, the processor 650 may output an output information (e.g., a screen user interface (UI), an image, text, or a sound) corresponding to reception of payment processing information.

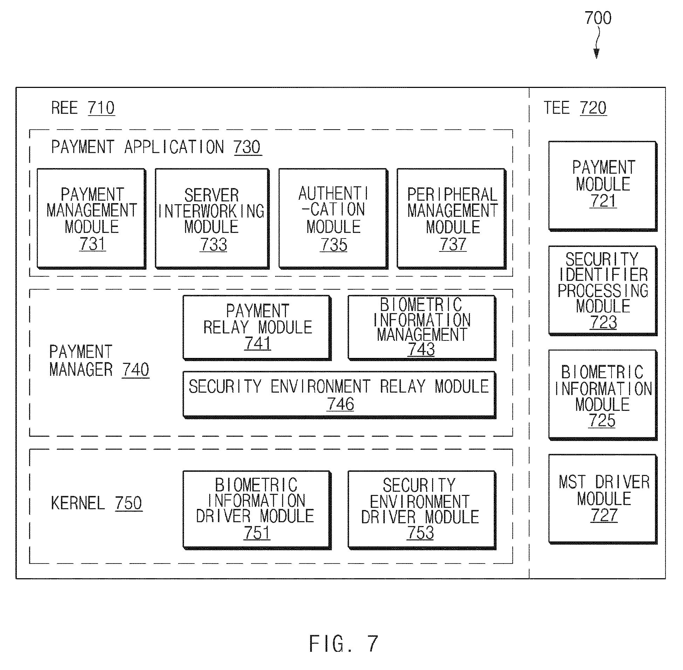

FIG. 7 is a block diagram illustrating program modules for being executed in an execution environment of an electronic device which may perform a payment function, according to an embodiment.

Referring to FIG. 7, an execution environment 700 may include, for example, a rich execution environment (REE) 710 and a trusted execution environment (TEE) 720.

According to an embodiment, the REE 710 may include, for example, a payment application 730, a payment manager 740, and a kernel 750, for a payment. According to an embodiment, the payment application 730 may include, for example, a payment management module 731, a server interworking module 733, an authentication module 735, and a peripheral management module 737.

According to an embodiment, the payment management module 731 may perform an operation for card registration, card authentication, card deletion, or a payment. For example, the payment management module 731 may register a card of a user of an electronic device. The electronic device may receive a card registration request from the user. The electronic device may obtain a card image using its camera module. The payment management module 731 may obtain a card image through an OCR module. The payment management module 731 may receive information (e.g., a password, a home address, an e-mail address, a phone number, or an account identifier (ID)), associated with card information, from the user and may obtain the information from a payment server 300 of FIG. 1.

According to an embodiment, the payment management module 731 may display a registered card to the user through a display. The user may correct at least part (e.g., a card name, a home address, a phone number, the number of times of attempting to pay, or information indicating whether payment notification information is received, and the like) of information of registered cards. The payment management module 731 may display transaction records based on each of the registered cards. The payment management module 731 may display card information registered in a wearable device (e.g., a smart watch) operatively connected with the electronic device. If the server interworking module 733 receives payment processing information received from the payment server 300, the payment management module 731 may output the received payment processing information on the display. Alternatively, the payment management module 731 may display information, corresponding to a notification message provided from the payment server 300, on the display.

According to an embodiment, the server interworking module 733 may receive a payment related message, a device related message, or a service related message from the payment server 300 or a token service provider (TSP). The server interworking module 733 may send the payment related message, the device related message, or the service related message to the payment management module 731. According to an embodiment, the server interworking module 733 may include, for example, a push management module and an account management module. For example, if a message received from the payment server 300 has a push notification format associated with a token, the push management module may process the corresponding message. If the received message is an account related information (e.g., a Samsung account), the account management module may process the corresponding message.

Also, the account management module may manage card information (e.g., a visa card ID & password) linked with a service account (e.g., a registration01@samsung.com) and membership information (e.g., CJ membership points and registration001@Cj.com) by interworking with a server. Payment processing information (e.g., a payment amount) and membership accumulation information (e.g., point scores, mileages, and the like) may be automatically accumulated and subtracted from each other based on the membership information by interworking with each other, upon paying by a card. If a payment application including the account management module is installed, setting states of some or all of conventionally registered cards may continuously interwork with each other to use using one account log-in (or sign-in) process of a user in any device. Also, membership information having a relative low authentication security level may be registered and linked with an account of the user, thus reducing the number of additional authentication processes.

According to an embodiment, the authentication module 735 may display output information (e.g., a screen user interface (UI)), for performing authentication of a card or the user for a payment, through the display.

The peripheral management module 737 may manage an external device operatively connected with the electronic device. The peripheral management module 737 may include, for example, an MST peripheral module and a wearable device module. According to an embodiment, the MST peripheral module may output information indicating whether an MST accessory (e.g., a fob device of the LoopPayTM company) and the electronic device connects wiredly or wireless with each other and may provide output information (e.g., a screen UI, a sound, or vibration) suitable for the user based on the information. After a card registration, deletion, or payment process progresses in a state where the MST accessory connects with the electronic device, the output information (e.g., the screen UI, the sound, or the vibration) may be output. The MST peripheral module 737 may store a variety of card information utilized for a payment in the electronic device or a separate memory of the MST accessory in a state where the MST accessory connects with the electronic device. The variety of card information may allow the electronic device or the MST accessory to proceed with a payment independently in a state where the MST accessory is not connected with the electronic device.

According to an embodiment, the payment manager 740 may include, for example, a payment relay module 741, a biometric information management module 743, and a security environment relay module 746. The payment relay module 741 may relay a card or information (e.g., a token) corresponding to the card to the payment application 730, the kernel 750, or the payment server 300. According to an embodiment, the payment relay module 741 may pay offline through a communication module (e.g., an NFC module or an MST module). A payment mode using NFC may be executed through a payment processing device, and a payment mode using MST may be executed by a user input. Also, the payment relay module 741 may pay online through a communication module (e.g., a cellular module, a radio frequency (RF) communication, a wireless-fidelity (Wi-Fi) module, and the like). The payment relay module 741 may include an encryption library to send a message or command to the TEE 720. The payment relay module 741 may communicate a message or command with the TEE 720 through the encryption library.

According to an embodiment, the payment relay module 741 may send messages, such as token provisioning, token replenishment, token suspension, token resume, and token disuse, to the payment server 300 using a general token or key management function. According to an embodiment, the payment relay module 741 may receive a push message from a financial server or a TSP and may send the received push message to the payment application 730.

According to an embodiment, if having both of a token and primary account number (PAN) information for one card, the payment relay module 741 may pay using at least one of the token or the PAN information. The payment relay module 741 may determine whether it is possible for a payment processing device to pay by the PAN information or the token. For example, the electronic device may receive information which may pay through Bluetooth low energy (BLE). The payment relay module 741 may verify the information. If it is possible to pay by the token based on the verified information, the payment relay module 741 may pay by the token. If it is possible to pay by the PAN information, the payment relay module 741 may pay by the PAN information.

According to an embodiment, the security environment relay module 746 may further include a function of relay such that the payment application 730 accesses a biometric information driver module 751 or a security environment driver module 753 to use a function provided from a payment module 721 or a biometric information module 725. The payment relay module 741 may include an encryption library to send a message or command to the security environment relay module 746. The payment relay module 741 may communicate a message or command with the security environment relay module 746 through the encryption library.

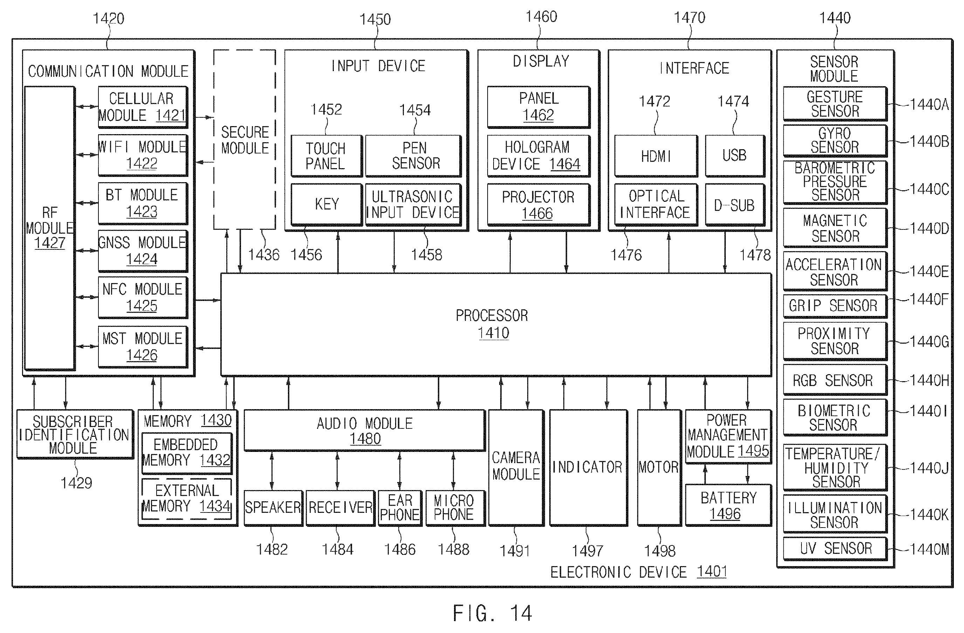

The kernel 750 may include, for example, the biometric information driver module 751 and the security environment driver module 753. The biometric information driver module 751 may send a message, sent from the biometric information management module 743, to a biometric sensor 1440I of FIG. 14. Biometric information obtained from the biometric sensor 1440I may be sent to the biometric information module 725 in the TEE 720 through the biometric information driver module 751 without being sent to a module in the REE 710.

The security environment driver module 753 may play a role as an interface for sending a message from a module in the REE 710 to a module in the TEE 720. For example, in case of an ARM "trust zone" as an embodiment of the TEE 720, an application processor (not shown) may perform operations of the REE 710 and the TEE 720 in a time-sliced manner and may implement a separate data path for sending a message from the REE 710 to the TEE 720 with hardware. In this case, a driver module for access this hardware may be the security environment driver module 753. The security environment driver module 753 may send a message for an operation of a module in the TEE 720 to a module in the REE 710.

According to an embodiment, the TEE 720 may include the payment module 721, a security identifier processing module 723, the biometric information module 725, and an MST driver module 727. The payment module 721 may obtain a token and a token cryptogram from the electronic device or an external electronic device. A key (e.g., a limited used key (LUK) or a single used key) for generating the token and the token cryptogram may be stored in the REE 710 or the TEE 720. In addition, if the token and the key are stored in the REE 710, the payment module 721 of the TEE 720 may perform encryption using the key (e.g., a device root key (DRK)) of the TEE 720 and may store the encrypted key.

The biometric information module 725 may store biometric information of the user who uses the electronic device and may compare the stored biometric information with information received from a biometric sensor to perform user authentication. The biometric information module 725 may include a fingerprint information module, an iris information module, and the like. The biometric information module 725 may collect information from the biometric sensor. If the payment application 730 displays the contents of authenticating biometric information of the user on the display, the user may provide the biometric information through the biometric sensor. The authentication module 735 of the payment application 730 may send a message of collecting biometric information to the biometric information driver module 751 through the biometric information management module 743.

The biometric information driver module 751 may send the message to the biometric sensor. The biometric sensor may collect biometric information of the user and may send the collected biometric information to the TEE 720. The biometric information module 725 of the TEE 720 may compare the received biometric information with the stored biometric information of the user and may send information, indicating whether user authentication is achieved, to the authentication module 735 of the payment application 730 through the biometric information management module 743 of the REE 710 through the security environment driver module 753. The payment application 730 may display the information, indicating whether the user authentication is achieved, on the display. The biometric information of the user may be stored in the TEE 720, may be stored in the REE 710 in a state where it is encrypted, or may be stored in a secure module (e.g., an eSE).

The security identifier processing module 723 may obtain an input value, utilized for the electronic device or associated with authentication, through a user input. For example, the input value may be a personal identification number (PIN) while a payment is performed. For example, the input value may be a primary account number (PAN), a card expiration date, or a card verification value (CVV), and the like. The security identifier processing module 723 may be displayed in the form of an application.

If performing a payment, the electronic device may send the message that the payment application 730 performs the payment to the payment relay module 741. The payment relay module 741 may determine whether to pay by an MST mode or an NFC mode. In case of paying by the MST mode, the electronic device may obtain information (e.g., a token, a token cryptogram, part of PAN information, a token expiration date, and the like) utilized for performing a payment from the payment module 721 of the TEE 720 and may send the obtained information to the MST driver module 727 in the TEE 720. The MST driver module 727 may output the information to an MST controller (not shown). The MST controller may output the information to pay.

Based on the above-mentioned execution environment 700, generating and processing payment related information may be performed in the TEE 720, and receiving and outputting payment processing information may be performed in the REE 710. According to various embodiments, a token utilized when the payment related information is generated may be received and operated based on operation of the TEE 720. Outputting payment related information based on MST may be ended based on receiving payment processing information by operation of the MST driver module 727.

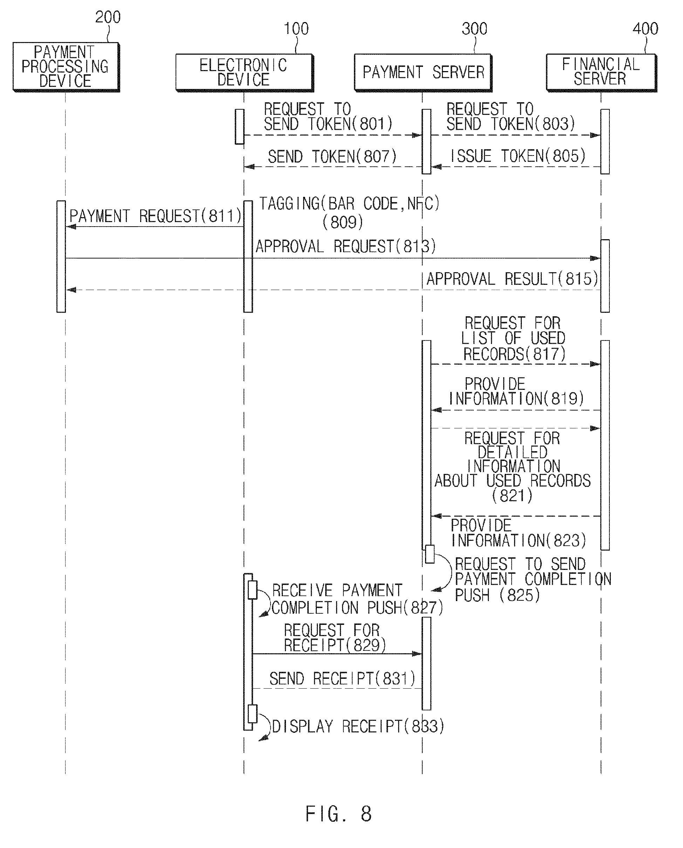

FIG. 8 is a signal sequence diagram illustrating a payment information operation process according to an embodiment.

Referring to FIG. 8, in connection with payment information operation, in operation 801, an electronic device 100 may provide a token request to a payment server 300. For example, after user authentication is completed, if a specific card for payment is selected (e.g., by a user selection), the electronic device 100 may request the payment server 300 to send a token. In this operation, the electronic device 100 may send information about the selected payment card and associated user information to the payment server 300.

In operation 803, the payment server 300 may provide a token request to the financial server 400. In this regard, the payment server 300 may determine whether to access a financial server based on the information received regarding the selected payment card. The payment server 300 may provide the associated user information to the financial server 400 to request the financial server 400 to issue a specific token.

In operation 805, the financial server 400 may issue the token and provide the issued token to the payment server 300. The financial server 400 may determine whether the received user information includes valid information (e.g., as a form of authentication). The financial server 400 may issue a token (e.g., a token or one time card-number which may be used during a specific period of time or condition) based on the valid user information (e.g., upon successful authentication) and may transmit the issued token to the payment server 300. In operation 807, the payment server 300 may send the token to the electronic device 100. According to an embodiment, a token number may be configured with a 37-digit string, and each digit in the 37-digit string may be represented with a numeral. The token number may be configured with, for example, the first four digits of a real card number and randomly generated numbers. The above-mentioned token number and the card number may be included in data (e.g., track 2 data) sent through an MST mode. The number of digits of the token number, a location of a special character, or a form of the special character, and the like may be changed based on a change of the MST mode or a standard change.

In operation 809, the electronic device 100 may be positioned physically nearby a specific portion of a payment processing device 200, and may operate a waiting state for proceeding with a tagging or scanning operation. According to an embodiment, the electronic device 100 may await reception of a signal from an NFC reader in an operation of performing a tagging operation based on an NFC module. Alternatively, according to various embodiments, the electronic device 100 may display a bar code and the like on its display while waiting, or to indicate the waiting state. Alternatively, the electronic device 100 may output specific payment related information (e.g., an MST unique signal and the like) to the payment processing device 200 through its MST module. Also, the electronic device 100 may activate an NFC module, and may maintain a state in which an NFC scan signal is received, or may transmit a specific NFC signal to the payment processing device 200.

In operation 811, the payment processing device 200 may receive a payment request from the electronic device 100. The payment processing device 200 may receive a message, including payment related information, from the electronic device 100. In operation 813, the payment processing device 200 may transmit an approval request to the financial server 400. The payment processing device 200 may transmit a message (e.g., including a payment amount and the like) requesting approval of the transaction to the financial server 400 using the token information included in the received payment related information.

In operation 815, based on, for example, the prior issuance of the token (operation 805), the financial server 400 may provide an approval result to the payment processing device 200. For example, the financial server 400 may determine whether to approve a payment amount based on token information included in the approval request provided from the payment processing device 200. If the payment amount is approved, the financial server 400 may send payment processing information indicating payment completion to the payment processing device 200. Alternatively, if it is impossible to approve the payment amount, the financial server 400 may provide payment processing information indicating payment failure to the payment processing device 200. The financial server 400 may store the payment processing information.

In operation 817, the payment server 300 may request a list of used records from the financial server 400. The payment server 300 may perform a waiting operation during a specific time after performing the token relay operation. For example, the payment server 300 may wait for a predesignated or statistically predicated time for the electronic device to transmit the payment related information to the payment processing device 200 after receiving the token, for the payment processing device 200 to transmit the approval request to the financial server 400, and for the financial server 400 to approve the payment. For example, the payment server 300 may wait for a few seconds to dozens of seconds or dozens of minutes depending on whatever policies are in place designating the waiting time. After the waiting time has elapsed, the payment server 300 may request the list of used records from the financial server 400. The list of used records may include the number of used records using user information, a transaction date, a payment amount, a store name, or a transaction number.

In operation 819, the financial server 400 may provide information. For example, the financial server 400 may provide the list of used records as recorded for a specific date (e.g., a present day) in response to the request of the payment server 300. Alternatively, the financial server 400 may provide a list of used records during a specific period of time (e.g., a certain span of 15 days) to the payment server 300. According to an embodiment, the payment server 300 may determine whether there one of the used records from the list of used records indicates a specific day or a specific time, as provided by the financial server 400. For example, the payment server 300 may determine whether there is a used record which indicates payment on a present day in the list of the used records. Alternatively, the payment server 300 may determine whether one of the used records indicates a specific time range (e.g., a used record generated or correlating to a specific time or range of time, relative to a current time) in a list of used records which pay today. If such a used record exists, in operation 821, the payment server 300 may instruct the financial server 400 to inquire about additionally detailed information about the corresponding used record (e.g., information such as a payment amount, an affiliated store, purchased records, and the like). The payment server 300 may then compare a transaction date with a current date in the list of the used records. If the transaction date corresponds to the current day or a previous day, the payment server 300 may instruct the financial server 400 to inquire for additionally detailed information regarding the used records, using a determined transaction number.

In operation 823, the financial server 400 may provide the detailed information to the payment server 300 in response to the request of the payment server 300. The payment server 300 may determine whether mapped information exists, using the token temporarily stored during the process of relaying the token. The payment server 300 may collect detailed information matching the token and may convert a format of the collected detailed information into a specific format, which may then be output to the electronic device 100.

According to an embodiment, the payment server 300 may receive information about used records (e.g., information including a payment date, store information, token information, and the like) from the financial server 400 and may provide the received information to the electronic device 100. The payment server 300 may generate payment processing information to be sent to the electronic device using token information (e.g., 5450899332412341) temporarily stored for the received payment processing information. According to an embodiment, a list of used records, obtained after the payment server 300 may inquire about used records using payment means information of the user, may be as follows:
<paymentList>
<paymentType>N</paymentType>
<transactionDate>20150707</transactionDate>
<totalAmount>2500</totalAmount>
<merchantName>Starbucks at main gate store of Samsung Electronics in Suwon</merchantName>
<transactionNumber>99993733</transactionNumber>
</paymentList>
<paymentList>
<paymentType>N</paymentType>
<transactionDate>20150708</transactionDate>
<totalAmount>1800</totalAmount>
<merchantName>BaskinRobbins</merchantName>
<transactionNumber>56781455</transactionNumber>
</paymentList>

The payment server 300 may request the financial server 400 to inquire about detailed records at a corresponding date or a previous date among transaction dates. If there is a record associated with the corresponding date, the payment server 300 may receive the accompanying message.
<message>
<paymentType>N</paymentType>
<transactionHistoryDate>20150707</transactionHistoryDate>
<totalAmount>2500</totalAmount>
<merchantName Starbucks at main gate store of Samsung Electronics in Suwon</merchantName>
<ott>xxxxxxxxxxxxxxxx</ott>
</message>
<message>
<paymentType>N</paymentType>
<transactionHistoryDate>20150708</transactionHistoryDate>
<totalAmount>1800</totalAmount>
<merchantName>BaskinRobbins</merchantName>
<ott>xxxxxxxxxxxxxxxx</ott>
</message>

Since a one-time token ("ott") number of a record the user pays for in the Baskin Robbins is the same as an issued ott number while the financial server 400 inquires about the detailed records, the payment server 300 may convert the corresponding record in the form of a specific receipt to send the corresponding record to the electronic device 100.

In operation 825, the payment server 300 may provide a request to send a payment completion push. For example, the payment server 300 may request a push server (not shown) to send notification, corresponding to the payment processing information converted in the form of the receipt, to the electronic device 100. In operation 827, the electronic device 100 may receive a payment completion push for the notification. The electronic device 100 may output the received notification. If a confirm input for the corresponding notification occurs, in operation 829, the electronic device 100 may request the payment server 300 to inquire about payment processing information, for example, a receipt. The payment server 300 may provide the receipt to the electronic device 100 in response to the request to inquire about the receipt. In operation 831, the electronic device 100 may receive the receipt. In operation 833, the electronic device 100 may display the received receipt.

According to various embodiments, the payment server 300 may connect to the payment processing device 200 or a value added network (VAN) which connects with the payment processing device 200 and supports payment of the payment processing device 200 and may collect payment records. In this case, the payment server 300 may generate payment processing information to be sent to the electronic device 100 based on information matched with token information, in the collected payment records and may provide the generated payment processing information to the electronic device 100.

According to various embodiments, the financial server 400 may directly provide payment records to the payment server 300. For example, if the payment server 300 requests the financial server 400 to issue a token, the financial server 400 may provide a payment record, matched with the issued token, among records approved based on an approval request of the payment processing device 200 to the payment server 300. In this operation, the financial server 400 may provide token information to the payment server 300 to support to classify the electronic device 100 to receive payment processing information.

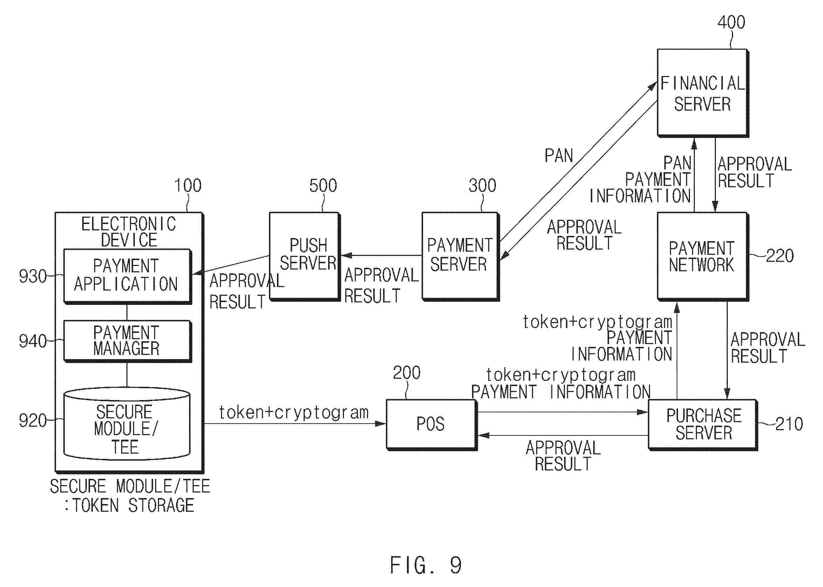

FIG. 9 is a block diagram illustrating a configuration of a system associated with a payment information operation according to an embodiment.

Referring to FIG. 9, a payment information operation system may include, for example, an electronic device 100, a payment processing device 200 (e.g., a point of sales or "POS" system), a purchase server 210, a payment network 220, a financial server 400, a payment server 300, and a push server 500. According to various embodiments, the payment server 300 and the push server 500 may be implemented with one configuration. For example, the payment server 300 may include the push server 500 and may control the push server 500 to provide an approval result to a payment application 930.

The electronic device 100 may request the payment server 300 to issue a token based on activation of the payment application 930 and operation of a payment manager 940. The payment server 300 may request the financial server 400 to issue the token and may provide the obtained token to the electronic device 100. The payment manager 940 of the electronic device 100 may store the received token in a secure module 920. The payment manager 940 of the electronic device 100 may generate payment related information based on the token stored in the secure module 920 and may provide the generated payment related information to the payment processing device 200.

According to an embodiment, the payment processing device 200 may receive the payment related information, including token information and encryption information (e.g. token + cryptogram), from the electronic device 100. The payment processing device 200 may send an approval request (e.g., including token + cryptogram + payment information), generated based on the received payment related information, to the purchase server 210. The purchase server 210 may send the received approval request to the payment network 220. The purchase server 210 may be, for example, a VAN provider. The payment network 220 may find a primary account number (PAN) corresponding to the received token and may send the found PAN. The payment network 220 may send PAN payment information to the financial server 400. The financial server 400 may generate an approval result corresponding to the PAN payment information and may send the approval result to the payment network 220. The approval result may be sent to the payment processing device 200 through the purchase server 210. In FIG. 9, an embodiment is exemplified as the payment network 220 and the financial server 400 are separated from each other. However, various embodiments may not be limited thereto. For example, the financial server 400 may operate the payment network 220. Therefore, in the payment information operation system, the payment network 220 may be included in the financial server 400.

The payment server 300 may send the received approval result to the push server 500. The push server 500 may send the approval result to the payment application 930 of the electronic device 100.

In the above-mentioned operation, the payment server 300 may request, for example, the financial server 400 to send an approval result at a certain period (e.g., a period when the entire time set to send payment related information based on a first payment mode is divided a certain number of times). If not obtaining an approval result (e.g., detailed information, at least part of which is matched with specific token information) after the sending of the payment related information is completed the certain number of times, the payment server 300 may send a message for payment failure to the electronic device 100.

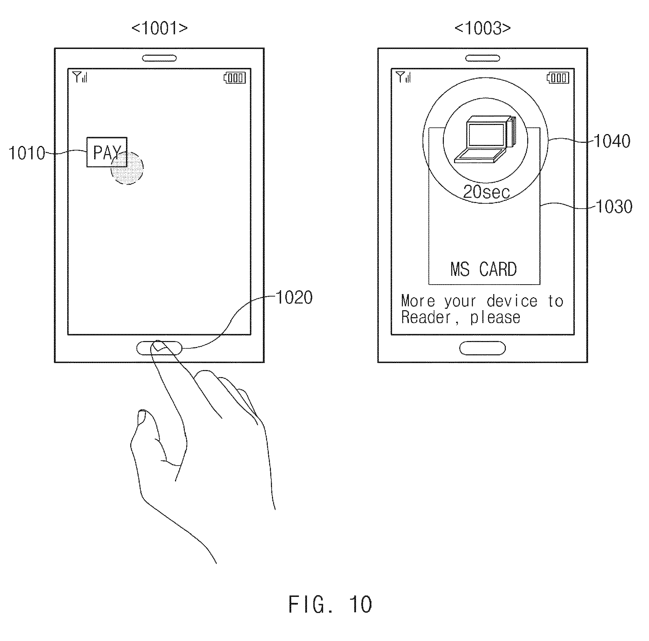

FIG. 10 is a drawing illustrating a screen interface associated with a payment progress operation according to an embodiment.

Referring to FIG. 10, an electronic device 100 of FIG. 1 may provide at least one item associated with operating a payment application. For example, in the state illustrated under element 1001, the electronic device 100 may output an icon 1010 associated with executing the payment application. When the icon 1010 is selected, the electronic device 100 may activate a corresponding payment application. When a specific condition occurs, such as, for example, receiving a request to execute the payment application, detecting selection of specific card information after the payment application is executed, or receiving a request to send payment related information after specific card information is selected, then, the electronic device 100 may perform user authentication. In this regard, the electronic device 100 may activate a fingerprint sensor 1020 to obtain fingerprint information. The electronic device 100 may perform user authentication by comparing fingerprint information obtained through the fingerprint sensor 1020 with stored fingerprint information.

If the user authentication is successful, then as seen under element 1003, the electronic device 100 may output specific output information (e.g., such as a screen including a UI, as depicted in the example). For example, the electronic device 100 may output a card object 1030 corresponding to card information selected for a payment and a payment mode guide object 1040 for providing guidance on operation of a payment mode. The payment mode guide object 1040 may be, for example, an object for providing guidance of operation for an MST payment mode. Alternatively, the payment mode guide object 1040 may be an object for providing guidance to at least one of the MST payment mode or an NFC payment mode. According to various embodiments, the payment mode guide object 1040 may output information indicating an entire time (or span of time) when payment related information is transmitted, based on the MST payment mode. For example, if the MST payment mode operates utilizing a time of about 20 seconds for transmission of payment related information , the payment mode guide object 1040 may display time count information (e.g., a countdown timer) after initiation of output of the payment related information is started.

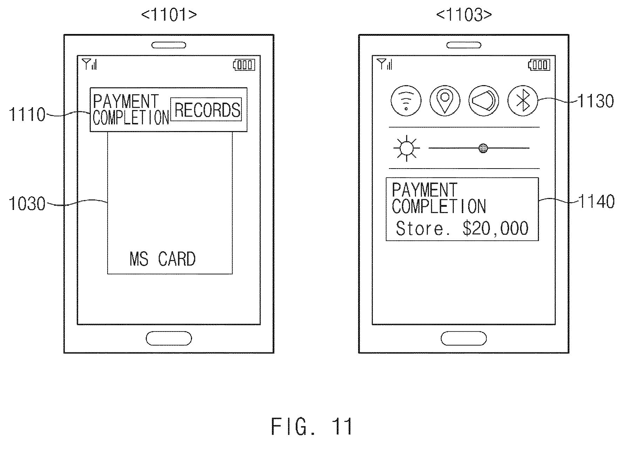

FIG. 11 is a drawing illustrating a screen interface associated with a payment completion operation according to an embodiment of the invention.

Referring to FIG. 11, an electronic device 100 of FIG. 1 may receive payment processing information from a payment server 300 of FIG. 1. According to an embodiment, the electronic device 100 may receive notification of payment processing information from the payment server 300. In this case, in state 1101, the electronic device 100 may display a notification object 1110 corresponding to the notification. For example, the electronic device 100 may output the notification object 1110 on a screen which displays a card object 1030. If the notification object 1110 is selected (e.g., if a record item included in the notification object 1110 is selected), the electronic device 100 may output payment processing information on the entire screen or a pop-up window and the like.

According to various embodiments, the electronic device 100 may provide notification of the payment processing information on a specific screen. For example, the electronic device 100 may provide the notification of the payment processing information through a specific effect sound or vibration and the like. Alternatively, the electronic device 100 may temporarily output a message corresponding to the notification of the payment processing information and may delete the message from a screen. Thereafter, in state 1103, the electronic device 100 may output a display item 1140, corresponding to the notification of the payment processing information, on a quick panel screen 1130. The display item 1140 may be output to be the same as the notification object 1110 or may include more detailed information. If the display item 1140 is selected, the electronic device 100 may output the payment processing information on the entire screen.

According to various embodiments, the electronic device 100 may receive notification based on payment non-processing. For example, the electronic device 100 may receive notification provided if the payment server 300 fails to collect payment processing information from a financial server 400 of FIG. 1 within the entire time when payment related information is sent (or outputted). When receiving the corresponding notification, the electronic device 100 may output information for guiding that a payment is not processed yet.

According to various embodiments, the electronic device 100 may receive payment processing information, the payment processing information about payment failure. In this case, the electronic device 100 may output a notification object for payment failure. When the notification object for the payment failure is selected (or when a display item on a quick panel for payment failure is selected), the electronic device 100 may output detailed information about the payment failure. For example, the electronic device 100 may output detailed information such as lack of balance and a lapse of a card expiration date.

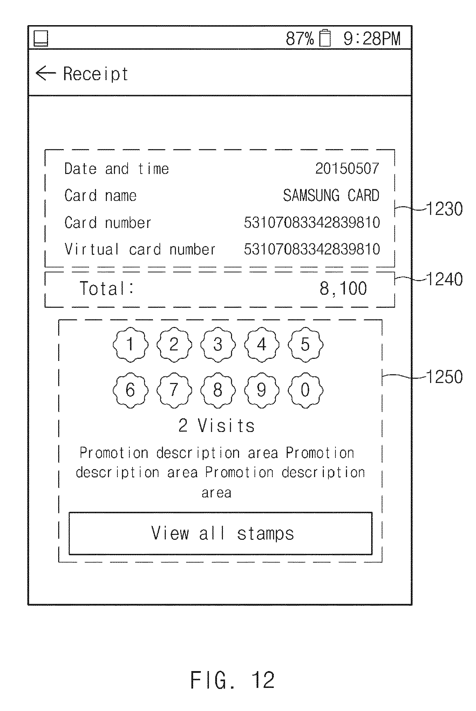

FIG. 12 is a drawing illustrating a screen interface associated with outputting payment processing information, according to an embodiment.

Referring to FIG. 12, an electronic device 100 of FIG. 1 may display payment processing information in response to selection of a notification object or a display item associated with the payment processing information. The payment processing information may be in the form of, for example, a receipt set in a payment server 300 of FIG. 1. The payment processing information may include, for example, a payment information region 1230, a payment amount region 1240, and an additional information region 1250.

The payment information region 1230 may include, for example, time information, a card name, a card number, a virtual card number, and the like. The payment amount region 1240 may be a region where a paid amount of money is written. The additional information region 1250 may be a region where a mileage or an additional option based on the use of a corresponding card is written. The mileage or the additional option may be information provided based on the use of the corresponding card from a financial server 400 of FIG. 1.

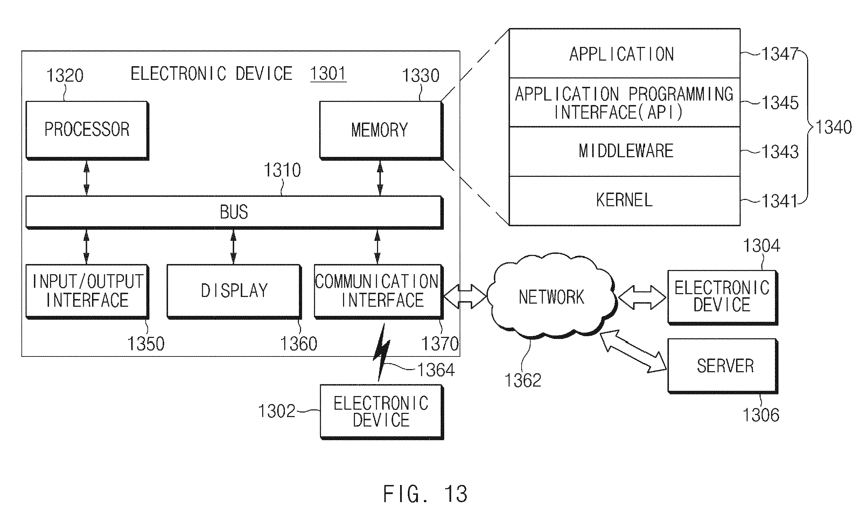

FIG. 13 is a block diagram illustrating a configuration of an electronic device in a network environment which may perform a payment function, according to an embodiment.

Referring to FIG. 13, in various embodiments, an electronic device 1301 and a first external electronic device 1302, a second external electronic device 1304, or a server 1306 may connect with each other through a network 1362 or local-area communication 1364. The electronic device 1301 may include a bus 1310, a processor 1320, a memory 1330, an input and output interface 1350, a display 1360, and a communication interface 1370. In various embodiments, at least one of the components may be omitted from the electronic device 1301, or other components may be additionally included in the electronic device 1301.

The bus 1310 may be, for example, a circuit which connects the components 1320 to 1370 with each other and transmits a communication signal (e.g., a control message and/or data) between the components.

The processor 1320 may include one or more of a central processing unit (CPU), an application processor (AP), or a communication processor (CP). For example, the processor 1320 may perform calculation or data processing about control and/or communication of at least another of the components of the electronic device 1301.

The memory 1330 may include a volatile and/or non-volatile memory. The memory 1330 may store, for example, a command or data associated with at least another of the components of the electronic device 1301. According to an embodiment, the memory 1330 may store software and/or a program 1340. The program 1340 may include, for example, a kernel 1341, a middleware 1343, an application programming interface (API) 1345, and/or an least one application program 1347 (or "at least one application"), and the like. At least part of the kernel 1341, the middleware 1343, or the API 1345 may be referred to as an operating system (OS).

The kernel 1341 may control or manage, for example, system resources (e.g., the bus 1310, the processor 1320, or the memory 1330, and the like) used to execute an operation or function implemented in the other programs (e.g., the middleware 1343, the API 1345, or the application program 1347). Also, as the middleware 1343, the API 1345, or the application program 1347 accesses a separate component of the electronic device 1301, the kernel 1341 may provide an interface which may control or manage system resources.

The middleware 1343 may play a role as, for example, a go-between such that the API 1345 or the application program 1347 communicates with the kernel 1341 to communicate data.

Also, the middleware 1343 may process one or more work requests, received from the application program 1347, in order of priority. For example, the middleware 1343 may assign priority which may use system resources (the bus 1310, the processor 1320, or the memory 1330, and the like) of the electronic device 1301 to at least one of the at least one application program 1347. For example, the middleware 1343 may perform scheduling or load balancing for the one or more work requests by processing the one or more work requests in order of the priority assigned to the at least one of the at least one application program 1347.

The API 1345 may be, for example, an interface in which the application program 1347 controls a function provided from the kernel 1341 or the middleware 1343. For example, the API 1345 may include at least one interface or function (e.g., a command) for file control, window control, image processing, or text control, and the like.

The input and output interface 1350 may play a role as, for example, an interface which may transmit a command or data input from a user or another external device to another component (or other components) of the electronic device 1301. Also, input and output interface 1350 may output an instruction or data received from another component (or other components) of the electronic device 1301 to the user or the other external device.

The display 1360 may include, for example, a liquid crystal display (LCD), a light emitting diode (LED) display, an organic LED (OLED) display, a microelectromechanical systems (MEMS) display, or an electronic paper display. The display 1360 may display, for example, a variety of content (e.g., text, images, videos, icons, or symbols, and the like) to the user. The display 1360 may include a touch screen, and may receive, for example, touch, gesture, proximity, or a hovering input using an electronic pen or part of a body of the user.

The communication interface 1370 may establish communication between, for example, the electronic device 1301 and an external device (e.g., a first external electronic device 1302, a second external electronic device 1304, or a server 1306). For example, the communication interface 1370 may connect to a network 1362 through wireless communication or wired communication and may communicate with the external device (e.g., the second external electronic device 1304 or the server 1306).

The wireless communication may use, for example, at least one of long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM), and the like as a cellular communication protocol. Also, the wireless communication may include, for example, local-area communication 1364. The local-area communication 1364 may include, for example, at least one of wireless-fidelity (Wi-Fi) communication, Bluetooth (BT) communication, near field communication (NFC), or global navigation satellite system (GNSS) communication, and the like.

An MST module may generate a pulse based on transmission data using an electromagnetic signal and may generate a magnetic field signal based on the pulse. The electronic device 1301 may output the magnetic field signal to a point of sales (POS) system. The POS system may restore the data by detecting the magnetic field signal using an MST reader and converting the detected magnetic field signal into an electric signal.

The GNSS may include, for example, at least one of a global positioning system (GPS), a Glonass, a Beidou navigation satellite system (hereinafter referred to as "Beidou"), or a Galileo (i.e., the European global satellite-based navigation system) according to an available area or a bandwidth, and the like. Hereinafter, the "GPS" used herein may be interchangeably with the "GNSS". The wired communication may include at least one of, for example, universal serial bus (USB) communication, high definition multimedia interface (HDMI) communication, recommended standard 232 (RS-232) communication, or plain old telephone service (POTS) communication, and the like. The network 1362 may include a telecommunications network, for example, at least one of a computer network (e.g., a local area network (LAN) or a wide area network (WAN)), the Internet, or a telephone network.

Each of the first and second external electronic devices 1302 and 1304 may be the same as or different device from the electronic device 1301. According to an embodiment, the server 1306 may include a group of one or more servers. According to various embodiments, all or some of operations executed in the electronic device 1301 may be executed in another electronic device or a plurality of electronic devices (e.g., the first external electronic device 1302, the second external electronic device 1304, or the server 1306). According to an embodiment, if the electronic device 1301 should perform any function or service automatically or according to a request, it may request another device (e.g., the first external electronic device 1302, the second external electronic device 1304, or the server 106) to perform at least part of the function or service, rather than executing the function or service for itself or in addition to the function or service. The other electronic device (e.g., the first external electronic device 1302, the second external electronic device 1304, or the server 1306) may execute the requested function or the added function and may transmit the executed result to the electronic device 1301. The electronic device 1301 may process the received result without change or additionally and may provide the requested function or service. For this purpose, for example, cloud computing technologies, distributed computing technologies, or client-server computing technologies may be used.

FIG. 14 is a block diagram illustrating a configuration of an electronic device according to various embodiments.

Referring to FIG. 14, the electronic device 1401 may include, for example, all or part of an electronic device 100 or 1301 shown in FIG. 1 or 13. The electronic device 1401 may include one or more processors 1410 (e.g., application processors (APs)), a communication module 1420, a subscriber identification module (SIM) 1429, a memory 1430, a secure module 1436, a sensor module 1440, an input device 1450, a display 1460, an interface 1470, an audio module 1480, a camera module 1491, a power management module 1495, a battery 1496, an indicator 1497, and a motor 1498.

The processor 1410 may drive, for example, an operating system (OS) or an application program to control a plurality of hardware or software components connected thereto and may process and compute a variety of data. The processor 1410 may be implemented with, for example, a system on chip (SoC). According to an embodiment, the processor 1410 may include a graphic processing unit (GPU) (not shown) and/or an image signal processor (not shown). The processor 1410 may include at least some (e.g., a cellular module 1421) of the components shown in FIG. 14. The processor 1410 may load a command or data received from at least one of other components (e.g., a non-volatile memory) into a volatile memory to process the data and may store various data in a non-volatile memory.

The communication module 1420 may have the same or similar configuration to a communication interface 170 or 1370 of FIG. 2 or 13. The communication module 1420 may include, for example, the cellular module 1421, a wireless-fidelity (Wi-Fi) module 1422, a Bluetooth (BT) module 1423, a global navigation satellite system (GNSS) module 1424 (e.g., a GPS module, a Glonass module, a Beidou module, or a Galileo module), a near field communication (NFC) module 1425, an MST module 1426, and a radio frequency (RF) module 1427.

The cellular module 1421 may provide, for example, a voice call service, a video call service, a text message service, or an Internet service, and the like through a communication network. According to an embodiment, the cellular module 1421 may identify and authenticate the electronic device 1401 in a communication network using the SIM 1429 (e.g., a SIM card). According to an embodiment, the cellular module 1421 may perform at least part of functions which may be provided by the processor 1410. According to an embodiment, the cellular module 1421 may include a communication processor (CP).

The Wi-Fi module 1422, the BT module 1423, the GNSS module 1424, the NFC module 1425, or the MST module 1426 may include, for example, a processor for processing data transmitted and received through the corresponding module. According to various embodiments, at least some (e.g., two or more) of the cellular module 1421, the Wi-Fi module 1422, the BT module 1423, the GNSS module 1424, the NFC module 1425, or the MST module 1426 may be included in one integrated chip (IC) or one IC package.

The RF module 1427 may transmit and receive, for example, a communication signal (e.g., an RF signal). Though not shown, the RF module 1427 may include, for example, a transceiver, a power amplifier module (PAM), a frequency filter, or a low noise amplifier (LNA), or an antenna, and the like. According to another embodiment, at least one of the cellular module 1421, the Wi-Fi module 1422, the BT module 1423, the GNSS module 1424, the NFC module 1425, or the MST module 1426 may transmit and receive an RF signal through a separate RF module.

The SIM 1429 may include, for example, a card which includes a SIM and/or an embedded SIM. The SIM 1429 may include unique identification information (e.g., an integrated circuit card identifier (ICCID)) or subscriber information (e.g., an international mobile subscriber identity (IMSI)).

The memory 1430 (e.g., a memory 130 or 1330 of FIG. 2 or 13) may include, for example, an embedded memory 1432 or an external memory 1434. The embedded memory 1432 may include at least one of, for example, a volatile memory (e.g., a dynamic random access memory (DRAM), a static RAM (SRAM), a synchronous dynamic RAM (SDRAM), and the like), or a non-volatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory, and the like), a hard drive, or a solid state drive (SSD)).

The external memory 1434 may include a flash drive, for example, a compact flash (CF), a secure digital (SD), a micro-SD, a mini-SD, an extreme digital (xD), a multimedia car (MMC), or a memory stick, and the like. The external memory 1434 may operatively and/or physically connect with the electronic device 1401 through various interfaces.

The secure module 1436 may be a module which has a relatively higher secure level than the memory 1430 and may be a circuit which stores secure data and guarantees a protected execution environment. The secure module 1436 may be implemented with a separate circuit and may include a separate processor. The secure module 1436 may include, for example, an embedded secure element (eSE) which is present in a removable smart chip or a removable SD card or is embedded in a fixed chip of the electronic device 1401. Also, the secure module 1436 may be driven by an OS different from the OS of the electronic device 1401. For example, the secure module 1436 may operate based on a java card open platform (JCOP) OS.

The sensor module 1440 may measure, for example, a physical quantity or may detect an operation state of the electronic device 1401, and may convert the measured or detected information to an electric signal. The sensor module 1440 may include at least one of, for example, a gesture sensor 1440A, a gyro sensor 1440B, a biometric pressure sensor 1440C, a magnetic sensor 1440D, an acceleration sensor 1440E, a grip sensor 1440F, a proximity sensor 1440G, a color sensor 1440H (e.g., red, green, blue (RGB) sensor), a biometric sensor 1440I, a temperature/humidity sensor 1440J, an illumination sensor 1440K, or an ultraviolet (UV) sensor 1440M. Additionally or alternatively, the sensor module 1440 may further include, for example, an e-nose sensor (not shown), an electromyography (EMG) sensor (not shown), an electroencephalogram (EEG) sensor (not shown), an electrocardiogram (ECG) sensor (not shown), an infrared (IR) sensor (not shown), an iris sensor (not shown), and/or a fingerprint sensor (not shown), and the like. The sensor module 1440 may further include a control circuit for controlling at least one or more sensors included therein. According to various embodiments, the electronic device 1401 may further include a processor configured to control the sensor module 1440, as part of the processor 1410 or to be independent of the processor 1410. While the processor 1410 is in a sleep state, the electronic device 1401 may control the sensor module 1440.

The input device 1450 may include, for example, a touch panel 1452, a (digital) pen sensor 1454, a key 1456, or an ultrasonic input unit 1458. The touch panel 1452 may use at least one of, for example, a capacitive type, a resistive type, an infrared type, or an ultrasonic type. Also, the touch panel 1452 may further include a control circuit. The touch panel 1452 may further include a tactile layer and may provide a tactile reaction to a user.

The (digital) pen sensor 1454 may be, for example, part of the touch panel 1452 or may include a separate sheet for recognition. The key 1456 may include, for example, a physical button, an optical key, or a keypad. The ultrasonic input unit 1458 may allow the electronic device 1401 to detect a sound wave using a microphone (e.g., a microphone 1488) and to verify data through an input tool generating an ultrasonic signal.

The display 1460 (e.g., a display 160 or 1360 of FIG. 2 or 13) may include a panel 1462, a hologram device 1464, or a projector 1466. The panel 1462 may include the same or similar configuration to the display 160 or 1360. The panel 1462 may be implemented to be, for example, flexible, transparent, or wearable. The panel 1462 and the touch panel 1452 may be integrated into one module. The hologram device 1464 may show a stereoscopic image in a space using interference of light. The projector 1466 may project light onto a screen to display an image. The screen may be positioned, for example, inside or outside the electronic device 1401. According to an embodiment, the display 1460 may further include a control circuit for controlling the panel 1462, the hologram device 1464, or the projector 1466.

The interface 1470 may include, for example, a high-definition multimedia interface (HDMI) 1472, a universal serial bus (USB) 1474, an optical interface 1476, or a D-subminiature 1478. The interface 1470 may be included in, for example, a communication interface 170 or 1370 shown in FIG. 2 or 13. Additionally or alternatively, the interface 1470 may include, for example, a mobile high definition link (MHL) interface, an SD card/multimedia card (MMC) interface, or an infrared data association (IrDA) standard interface.

The audio module 1480 may convert a sound and an electric signal in dual directions. At least part of components of the audio module 1480 may be included in, for example, an input and output interface 1350 (or a user interface) shown in FIG. 13. The audio module 1480 may process sound information input or output through, for example, a speaker 1482, a receiver 1484, an earphone 1486, or the microphone 1488, and the like.

The camera module 1491 may be a device which captures a still image and a moving image. According to an embodiment, the camera module 1491 may include one or more image sensors (not shown) (e.g., a front sensor or a rear sensor), a lens (not shown), an image signal processor (ISP) (not shown), or a flash (not shown) (e.g., an LED or a xenon lamp).

The power management module 1495 may manage, for example, power of the electronic device 1401. According to an embodiment, though not shown, the power management module 1495 may include a power management integrated circuit (PMIC), a charger IC or a battery or fuel gauge. The PMIC may have a wired charging method and/or a wireless charging method. The wireless charging method may include, for example, a magnetic resonance method, a magnetic induction method, or an electromagnetic method, and the like. An additional circuit for wireless charging, for example, a coil loop, a resonance circuit, or a rectifier, and the like may be further provided. The battery gauge may measure, for example, the remaining capacity of the battery 1496 and voltage, current, or temperature thereof while the battery 1496 is charged. The battery 1496 may include, for example, a rechargeable battery or a solar battery.

The indicator 1497 may display a specific state of the electronic device 1401 or part (e.g., the processor 1410) thereof, for example, a booting state, a message state, or a charging state, and the like. The motor 1498 may convert an electric signal into mechanical vibration and may generate vibration or a haptic effect, and the like. Though not shown, the electronic device 1401 may include a processing unit (e.g., a GPU) for supporting a mobile TV. The processing unit for supporting the mobile TV may process media data according to standards, for example, a digital multimedia broadcasting (DMB) standard, a digital video broadcasting (DVB) standard, or a mediaFlo™ standard, and the like.

Each of the above-mentioned elements of the electronic device according to various embodiments of the present disclosure may be configured with one or more components, and names of the corresponding elements may be changed according to the type of the electronic device. The electronic device according to various embodiments of the present disclosure may include at least one of the above-mentioned elements, some elements may be omitted from the electronic device, or other additional elements may be further included in the electronic device. Also, some of the elements of the electronic device according to various embodiments of the present disclosure may be combined with each other to form one entity, thereby making it possible to perform the functions of the corresponding elements in the same manner as before the combination.

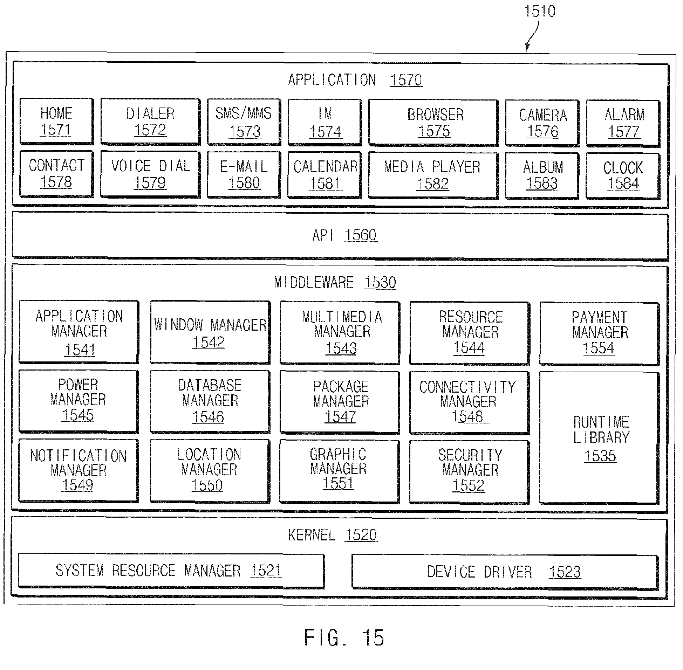

FIG. 15 is a block diagram illustrating a configuration of a program module 310 according to various embodiments.

According to an embodiment, the program module 1510 (e.g., a program 1340 of FIG. 13) may include an operating system (OS) for controlling resources associated with an electronic device (e.g., an electronic device 100 or 1301 of FIG. 1 or 13) and/or various applications (e.g., an application program 1347 of FIG. 13) which are executed on the OS. The OS may be, for example, Android, iOS, Windows, Symbian, Tizen, or Bada, and the like.

The program module 1510 may include a kernel 1520, a middleware 1530, an application programming interface (API) 1560, and/or an application 1570. At least part of the program module 1510 may be preloaded on the electronic device, or may be downloaded from an external electronic device (e.g., a first external electronic device 1302, a second external electronic device 1304, or a server 1306, and the like of FIG. 13).

The kernel 1520 (e.g., a kernel 1341 of FIG. 13) may include, for example, a system resource manager 1521 and/or a device driver 1523. The system resource manager 1521 may control, assign, or collect, and the like system resources. According to an embodiment, the system resource manager 1521 may include a process management unit, a memory management unit, or a file system management unit, and the like. The device driver 1523 may include, for example, a display driver, a camera driver, a Bluetooth (BT) driver, a shared memory driver, a universal serial bus (USB) driver, a keypad driver, a wireless-fidelity (Wi-Fi) driver, an audio driver, or an interprocess communication (IPC) driver.

The middleware 1530 (e.g., a middleware 1343 of FIG. 13) may provide, for example, functions the application 1570 needs in common, and may provide various functions to the application 1570 through the API 1560 such that the application 1570 efficiently uses limited system resources in the electronic device. According to an embodiment, the middleware 1530 (e.g., the middleware 1343) may include at least one of a runtime library 1535, an application manager 1541, a window manager 1542, a multimedia manager 1543, a resource manager 1544, a power manager 1545, a database manager 1546, a package manager 1547, a connectivity manager 1548, a notification manager 1549, a location manager 1550, a graphic manager 1551, a security manager 1552, or a payment manager 1554.

The runtime library 1535 may include, for example, a library module used by a compiler to add a new function through a programming language while the application 1570 is executed. The runtime library 1535 may perform a function about input and output management, memory management, or an arithmetic function.

The application manager 1541 may manage, for example, a life cycle of at least one of the application 1570. The window manager 1542 may manage graphic user interface (GUI) resources used on a screen of the electronic device. The multimedia manager 1543 may determine a format utilized for reproducing various media files and may encode or decode a media file using a codec corresponding to the corresponding format. The resource manager 1544 may manage source codes of at least one of the application 1570, and may manage resources of a memory or a storage space, and the like.

The power manager 1545 may act together with, for example, a basic input/output system (BIOS) and the like, may manage a battery or a power source, and may provide power information utilized for an operation of the electronic device. The database manager 1546 may generate, search, or change a database to be used in at least one of the application 1570. The package manager 1547 may manage installation or update of an application distributed by a type of a package file.

The connectivity manager 1548 may manage, for example, wireless connection such as Wi-Fi connection or BT connection, and the like. The notification manager 1549 may display or notify events, such as an arrival message, an appointment, and proximity notification, by a method which is not disturbed to the user. The location manager 1550 may manage location information of the electronic device. The graphic manager 1551 may manage a graphic effect to be provided to the user or a user interface (UI) related to the graphic effect. The security manager 1552 may provide all security functions utilized for system security or user authentication, and the like. According to an embodiment, when the electronic device (e.g., an electronic device 100 or 1301 of FIG. 1 or 13) has a phone function, the middleware 1530 may further include a telephony manager (not shown) for managing a voice or video communication function of the electronic device.

The middleware 1530 may include a middleware module which configures combinations of various functions of the above-described components. The middleware 1530 may provide a module which specializes according to kinds of OSs to provide a differentiated function. Also, the middleware 1530 may dynamically delete some of old components or may add new components.

The API 1560 (e.g., an API 1345 of FIG. 13) may be, for example, a set of API programming functions, and may be provided with different components according to OSs. For example, in case of Android™ or iOS™, one API set may be provided according to platforms. In case of Tizen™, two or more API sets may be provided according to platforms.

The application 1570 (e.g., an application program 1347 of FIG. 13) may include one or more of, for example, a home application 1571, a dialer application 1572, a short message service/multimedia message service (SMS/MMS) application 1573, an instant message (IM) application 1574, a browser application 1575, a camera application 1576, an alarm application 1577, a contact application 1578, a voice dial application 1579, an e-mail application 1580, a calendar application 1581, a media player application 1582, an album application 1583, a clock application 1584, a health care application (e.g., an application for measuring quantity of exercise or blood sugar, and the like), or an environment information application (e.g., an application for providing atmospheric pressure information, humidity information, or temperature information, and the like), and the like.

According to an embodiment, the application 1570 may include an application (hereinafter, for better understanding and ease of description, referred to as "information exchange application") for exchanging information between the electronic device (e.g., the electronic device 100 or 1301 of FIG. 1 or 13) and an external electronic device (e.g., the first external electronic device 1302 or the second external electronic device 1304). The information exchange application may include, for example, a notification relay application for transmitting specific information to the external electronic device or a device management application for managing the external electronic device.

For example, the notification relay application may include a function of transmitting notification information, which is generated by other applications (e.g., the SMS/MMS application, the e-mail application, the health care application, or the environment information application, and the like) of the electronic device, to the external electronic device (e.g., the first external electronic device 1302 or the second external electronic device 1304). Also, the notification relay application may receive, for example, notification information from the external electronic device, and may provide the received notification information to the user of the electronic device.

The device management application may manage (e.g., install, delete, or update), for example, at least one (e.g., a function of turning on/off the external electronic device itself (or partial components) or a function of adjusting brightness (or resolution) of a display) of functions of the external electronic device (e.g., the first external electronic device 1302 or the second external electronic device 1304) which communicates with the electronic device, an application which operates in the external electronic device, or a service (e.g., a call service or a message service) provided from the external electronic device.

According to an embodiment, the application 370 may include an application (e.g., the health card application of a mobile medical device) which is preset according to attributes of the external electronic device (e.g., the first external electronic device 1302 or the second external electronic device 1304). According to an embodiment, the application 1570 may include an application received from the external electronic device (e.g., the server 1306, the first external electronic device 1302, or the second external electronic device 1304). According to an embodiment, the application 1570 may include a preloaded application or a third party application which may be downloaded from a server. Names of the components of the program module 1510 according to various embodiments of the present disclosure may differ according to kinds of OSs.

According to various embodiments, at least part of the program module 1510 may be implemented with software, firmware, hardware, or at least two or more combinations thereof. At least part of the program module 1510 may be implemented (e.g., executed) by, for example, a processor (e.g., a processor 1320 of FIG. 13). At least part of the program module 1510 may include, for example, a module, a program, a routine, sets of instructions, or a process, and the like for performing one or more functions.

The terminology "module" used herein may mean, for example, a unit including one of hardware, software, and firmware or two or more combinations thereof. The terminology "module" may be interchangeably used with, for example, terminologies "unit", "logic", "logical block", "component", or "circuit", and the like. The "module" may be a minimum unit of an integrated component or a part thereof. The "module" may be a minimum unit performing one or more functions or a part thereof. The "module" may be mechanically or electronically implemented. For example, the "module" may include at least one of an application-specific integrated circuit (ASIC) chip, field-programmable gate arrays (FPGAs), or a programmable-logic device, which is well known or will be developed in the future, for performing certain operations.

According to various embodiments of the present disclosure, at least part of a device (e.g., modules or the functions) or a method (e.g., operations) may be implemented with, for example, instructions stored in computer-readable storage media which have a program module. When the instructions are executed by a processor, one or more processors may perform functions corresponding to the instructions. The computer-readable storage media may be, for example, a memory.

The computer-readable storage media may include a hard disc, a floppy disk, magnetic media (e.g., a magnetic tape), optical media (e.g., a compact disc read only memory (CD-ROM) and a digital versatile disc (DVD)), magneto-optical media (e.g., a floptical disk), a hardware device (e.g., a ROM, a random access memory (RAM), or a flash memory, and the like), and the like. Also, the program instructions may include not only mechanical codes compiled by a compiler but also high-level language codes which may be executed by a computer using an interpreter and the like. The above-mentioned hardware device may be configured to operate as one or more software modules to perform operations according to various embodiments of the present disclosure, and vice versa.

Modules or program modules according to various embodiments of the present disclosure may include at least one or more of the above-mentioned components, some of the above-mentioned components may be omitted, or other additional components may be further included. Operations executed by modules, program modules, or other components may be executed by a successive method, a parallel method, a repeated method, or a heuristic method. Also, some operations may be executed in a different order or may be omitted, and other operations may be added.

According to various embodiments, the electronic device may more easily verify payment information and may reduce a waste of power consumed by payment processing.

Embodiments of the present disclosure described and shown in the drawings are provided as examples to describe technical content and help understanding but do not limit the present disclosure. Accordingly, it should be interpreted that besides the embodiments listed herein, all modifications or modified forms derived based on the technical ideas of the present disclosure are included in the present disclosure as defined in the claims, and their equivalents.

The above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein.

The control unit may include a microprocessor or any suitable type of processing circuitry, such as one or more general-purpose processors (e.g., ARM-based processors), a Digital Signal Processor (DSP), a Programmable Logic Device (PLD), an Application-Specific Integrated Circuit (ASIC), a Field-Programmable Gate Array (FPGA), a Graphical Processing Unit (GPU), a video card controller, etc. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. In addition, an artisan understands and appreciates that a "processor" or "microprocessor" may be hardware in the claimed disclosure.

## Claims

1. An electronic device, comprising:
a first communication circuit configured to perform local-area communication with an external payment device communicatively coupled with a first external computing device;
a second communication circuit configured to perform wireless communication with a second external computing device;
a user interface;
at least one memory storing instructions; and
a processor electrically coupled with the first communication circuit, the second communication circuit, the user interface, and the at least one memory, wherein the instructions are executable by the processor to:
receive payment related information from the second external computing device using the second communication circuit,
execute a payment by transmitting the received payment related information to the first external computing device through the external payment device using the first communication circuit,
receive payment processing information from the second external computing device using the second communication circuit, the received payment processing information indicating a result of the executed payment, and
control the user interface to display the received payment processing information.

2. The electronic device of claim 1, wherein the payment processing information is generated by the second external computing device based on information about used records provided by the first external computing device to the second external computing device.

3. The electronic device of claim 1 or 2, wherein the instructions comprise at least one of:
instructions executable by the processor to receive a notification confirming receival of the payment processing information and display information corresponding to the received notification through the user interface;
instructions executable by the processor to request from the second external computing device transmission of the received payment processing information, in response to detecting generation of an input event associated with verifying the received notification; or
instructions executable by the processor to control the user interface to display information indicating non-processing for the executed payment in response to receiving payment non-processing information.

4. The electronic device of claim 1, 2 or 3, wherein the instructions are further executable by the processor to:
in response to receiving information indicating non-processing for the executed payment, maintain the outputting of the received payment related information through the first communication circuit, or
in response to receiving information indicating non-processing for the executed payment, repeat the outputting of the received payment related information a predetermined number of times.

5. The electronic device of claim 4, wherein the instructions comprise at least one of:
instructions executable by the processor to terminate outputting the received payment related information in response to detecting that a predefined condition is met;
instructions executable by the processor to terminate outputting the received payment related information when the outputting is configured to continue for a predetermined time period, and the predetermined time period lapses; or
instructions executable by the processor to terminate outputting the received payment related information in response to detecting receival of the payment processing information.

6. The electronic device of any of claims 1-5, wherein the outputting the received payment information is based on a magnetic secure transmission (MST) mode, and the instructions are further executable by the processor to: terminate outputting the received payment related information in response to detecting receival of the payment processing information.

7. The electronic device of any of claims 1-6, wherein the instructions are further executable by the processor to: deactivate at least one of an MST mode communication module using the first communication circuit, and a near field communication (NFC) mode communication module.

8. A payment method in an electronic device including a first communication circuit configured to perform local-area communication with an external payment device communicatively connected with a first external computing device, and a second communication circuit configured to perform wireless communication with a second external computing device, the method comprising:
receiving payment related information from the second external computing device using a second communication circuit;
executing a payment by outputting the received payment related information to the first external computing device through the external payment device using the first communication circuit;
receiving payment processing information from the second external computing device using the second communication circuit, the received payment processing information indicating a result of the executed payment; and
controlling a user interface to output the received payment processing information.

9. The method of claim 8, wherein the outputting the received payment processing information comprises:
receiving a notification confirming reception of the payment processing information; and
outputting information related to the received notification on a user interface.

10. The method of claim 9, wherein the outputting the received payment processing information comprises:
receiving an input event verifying the received notification; and
transmitting a request to the second external computing device to transmit the payment processing information, and receiving the payment processing information from the second external computing device.

11. The method of claim 8, 9 or 10, wherein the outputting the received payment processing information comprises:
outputting by the user interface information indicating the payment non-processing for the executed payment in response to receiving payment non-processing information.

12. The method of any of claims 8-11, further comprising:
maintaining the outputting the payment related information through the first communication circuit in response to receiving information indicating non-processing of the executed payment.

13. The method of any of claims 8-12, further comprising at least one of:
terminating outputting the received payment related information in response to detecting that a condition is met,
terminating outputting the received payment related information, when the outputting is configured to continue for a predetermined time period, and the predetermined time period lapses; or
terminating outputting the received payment related information in response to receiving the payment processing information.

14. The method of claim 13, wherein terminating outputting the received payment related information is based on a magnetic secure transmission (MST) mode.

15. The method of any of claims 8-14, further comprising:
deactivating at least one of an MST mode communication module using the first communication circuit, and a near field communication (NFC) mode communication module.
